(19) Europäisches Patentamt
European Patent Office
Office européen des brevets

(11) EP 2 889 348 B1

(12) # FASCICULE DE BREVET EUROPEEN

(45) Date de publication et mention de la délivrance du brevet:
**30.01.2019 Bulletin 2019/05**

(21) Numéro de dépôt: **14200280.7**

(22) Date de dépôt: **24.12.2014**

(51) Int Cl.:
*C09J 7/38* (2018.01) *C09J 7/22* (2018.01)
*C09J 175/08* (2006.01) *C08G 18/10* (2006.01)
*C08G 18/48* (2006.01) *C08G 18/75* (2006.01)
*C08G 18/28* (2006.01) *C08L 9/00* (2006.01)

(54) **Article auto-adhèsif supporté sur mousse**

Auf Schaumstoff angeordneter selbstklebender Artikel

Self-adhesive article with foam support

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2013 FR 1363674**

(43) Date de publication de la demande:
**01.07.2015 Bulletin 2015/27**

(73) Titulaire: **BOSTIK SA**
**93210 La Plaine Saint Denis (FR)**

(72) Inventeurs:
- **Goubard, David**
  **60200 Compiegne (FR)**
- **Laferte, Olivier**
  **60350 Trosly Breuil (FR)**
- **Troadec, Herveline**
  **60200 Compiegne (FR)**

(74) Mandataire: **Hirsch & Associés**
**137, rue de l'Université**
**75007 Paris (FR)**

(56) Documents cités:
**EP-A1- 2 336 208**
**WO-A1-2013/136108**
**WO-A2-2012/090151**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

**Description**

DOMAINE TECHNIQUE

La présente invention concerne un article auto-adhésif comprenant une couche support de type mousse et une couche adhésive obtenue par réticulation d'une composition adhésive. La présente invention concerne également un mélange d'au moins deux polymères susceptible d'être utilisé pour la fabrication de l'article auto-adhésif ainsi qu'une composition adhésive comprenant ledit mélange d'au moins deux polymères selon l'invention.

ETAT DE LA TECHNIQUE

Les adhésifs sensibles à la pression (également dénommés colles auto-adhésives ou encore, en anglais, "Pressure Sensitive Adhesives" ou PSA) sont des substances conférant à la couche support aussi appelée substrat qui en est revêtue un pouvoir collant, ou pégosité, immédiat à température ambiante (souvent désigné sous le terme de « tack »), lequel permet son adhésion instantanée à un substrat sous l'effet d'une pression légère et brève. Les PSA sont largement utilisés pour la fabrication d'étiquettes ou de films auto-adhésifs qui sont fixés sur des articles à des fins de présentation d'informations (telles que code barre, dénomination, prix) et/ou à des fins décoratives, que ce soit lors de collages définitifs ou temporaires. Les PSA sont également mis en oeuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture ; la fixation et le maintien d'éléments divers tels que panneaux, briques, objets protubérants, dans la construction de bâtiments ou d'édifices ; la fixation et le maintien de parties métalliques ou plastiques ou en verre, plates ou à profil spécifique, tels des câbles électriques, des films plastiques, des vitres, des tôles, des inscriptions, des logos, des parties de sièges, des tableaux de bord, des parois plastiques ou textiles, des conduits ou des tuyaux de circulation de fluides, notamment dans l'industrie des transports ; le collage des moquettes par rubans adhésifs double face.

En vue de la fabrication d'étiquettes et/ou rubans auto-adhésifs, les PSA sont souvent appliqués par des procédés d'enduction en continu sur la totalité de la surface d'une couche support (le cas échéant imprimable) de grandes dimensions, à raison d'une quantité (généralement exprimée en $g/m^2$) désignée ci-après par le terme de "grammage". La couche support est constituée de papier ou de film ou de feuille ou de plaque d'un matériau polymère à une ou plusieurs couches. La couche d'adhésif qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant typiquement jusqu'à 2 m de largeur et 1 m de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeur et de longueur déterminées.

Les PSA permettent, en raison de leur pégosité (« tack » en anglais) élevée à température ambiante, une prise ou accroche rapide de l'étiquette et/ou du ruban auto-adhésifs sur le substrat (ou article) à revêtir (par exemple, s'agissant d'étiquettes, sur des bouteilles ou bien, s'agissant de rubans, sur des cartons d'emballage à mettre en forme), propre à l'obtention de cadences de production industrielle importantes.

Il existe un domaine d'application des PSA pour lequel il est souhaitable que le pouvoir adhésif des étiquettes et/ou rubans sur le substrat soit également maintenu lorsque le joint de colle assurant la fixation est exposé (de même, par conséquent, que l'article revêtu de l'étiquette et/ou du ruban) à une température susceptible de varier dans un large domaine. On peut citer à titre d'exemple la pose d'étiquettes sur certains organes des automobiles (ou autres véhicules) situés à proximité du moteur, ou sur des emballages conçus pour recevoir durant leur conditionnement un liquide chaud, ou encore sur des articles (tels les pneumatiques) qui sont étiquetés à chaud, au sortir des chaînes de fabrication. On peut également citer la mise en oeuvre de rubans auto-adhésifs pour l'assemblage de pièces pour lesquelles une bonne tenue thermique est nécessaire comme dans le cas, par exemple, de l'habillage intérieur des avions ou autres véhicules.

Il peut également être utile d'assembler des surfaces qui ne sont pas strictement parallèles, ou bien de coller un article auto-adhésif sur une surface qui n'est pas lisse, par exemple une surface présentant des irrégularités. Une couche support dite « conformable » permet de gommer les irrégularités de surface mais également de coller deux surfaces qui ne sont pas strictement parallèles l'une par rapport à l'autre, par exemple en absorbant les différences d'épaisseur, les déformations provenant de la pose de l'article autoadhésif ou de l'utilisation du joint adhésif ainsi réalisé,

les surfaces courbées ou les surfaces complexes nécessitant un joint aussi adhérent que possible, supportant les vibrations. Le joint constitué peut aussi servir de barrière totale ou partielle ou provisoire à des fluides plus ou moins abondants et fréquents.

Des articles auto-adhésifs comprenant ce type de support dit « conformable » peuvent être utilisés dans de nombreux domaines d'application, tels que :

- l'automobile : pour la pose de logos, le lettrage, l'insonorisation intérieure, l'habillage intérieur, les collages dans l'habitacle ;
- la construction : pour l'isolation phonique et thermique, l'assemblage de fenêtres ;
- l'industrie : pour le montage (assemblage-fixation), pour la fixation de plaques de photopolymères par exemple, utilisées par les imprimeurs ;
- le mobilier : pour la fixation de miroirs par exemple ;
- l'électronique, pour la fixation ou la superposition des différents éléments constitutifs des éléments de commande ou d'interface.

La demande internationale WO 2011/082094 décrit un article auto-adhésif comprenant une couche support sous la forme d'une mousse et une composition adhésive à base de polyacrylate modifié par des fonctions silylées. Les polymères utilisés dans ce document sont des polymères en phase solvant. Ce document ne décrit pas la composition adhésive utilisée pour la fabrication de l'article auto-adhésif selon l'invention.

La demande US 6,231,962 décrit un article auto-adhésif comprenant une couche support sous la forme d'une mousse et une composition adhésive choisie parmi les oléfines, les colles siliconées, les colles à base de caoutchouc naturel, les colles à base de caoutchouc synthétique et autres colles à base d'élastomères. Les compositions adhésives décrites dans ce document présentent des problèmes de résistance à haute température et donc ne présentent pas une résistance au cisaillement satisfaisante. Ce document ne décrit pas la composition adhésive utilisée pour la fabrication de l'article auto-adhésif selon l'invention.

La demande WO 2009/106699 décrit un article auto-adhésif comprenant une couche adhésive obtenue à partir d'un polyuréthane. La demande EP 2336208 décrit un article auto-adhésif comprenant une couche adhésive obtenue à partir d'un polyéther. Ces deux demandes décrivent des articles auto-adhésifs mettant en oeuvre des supports rigides de type polyéthylène téréphtalate (PET).

Ces deux demandes ne décrivent pas d'articles auto-adhésifs comprenant un support tel que revendiqué, ni le mélange particulier d'au moins deux polymères tel que revendiqué.

Les supports conformables sont étirables et présentent généralement une faible densité. Par conséquent, ce type de support est déformable et peut se rompre facilement. En particulier, une mousse présente une structure alvéolaire, par exemple une structure remplie d'air avec des membranes fines, qui peut par conséquent se rompre facilement.

Toutes les compositions adhésives qui permettent la fabrication d'un article auto-adhésif comprenant un support de type PET ne permettent pas la fabrication d'un article auto-adhésif comprenant un support conformable et possédant des propriétés satisfaisantes pour les applications visées, telles qu'une résistance au cisaillement élevée et une température de rupture du joint de colle élevée.

## RESUME DE L'INVENTION

Un premier objet de la présente invention concerne un article auto-adhésif comprenant une couche support revêtue d'une couche adhésive, ladite couche support étant sous la forme d'une mousse et présentant une élongation à la rupture allant de 50 à 1200% mesurée selon la norme ISO 1926 à 23 °C et une densité apparente allant de 25 à 1200 kg/$m^3$ mesurée selon la norme ISO 845, ladite couche adhésive est obtenue par réticulation d'une composition adhésive comprenant :

a) au moins un polymère de formule (Ibis) ou au moins un polymère de formule (IIbis) ou un mélange d'au moins deux polymères choisis parmi les polyuréthanes et les polyéthers présentant un, deux ou trois groupements terminaux de type mono-, di- ou tri-alkoxysilane, ledit mélange comprenant au moins un polymère répondant à l'une des formules (Ibis), (IIbis), (IIIbis) et (IVbis),
étant entendu que:

- lorsqu'un polymère présentant deux ou trois groupements terminaux de type monoalkoxysilane est présent, ledit mélange comprend jusqu'à 15% en poids, par rapport au poids total du mélange, dudit polymère,
- lorsqu'un polymère présentant un groupement terminal de type mono-, di- ou tri-alkoxysilane est présent, ledit mélange comprend jusqu'à 15% en poids, par rapport au poids total du mélange, dudit polymère,

b) au moins une résine tackifiante, et
c) au moins un catalyseur de réticulation ;

où

le polymère de formule (Ibis) est un polyuréthane ou un polyéther comprenant deux ou trois groupements terminaux de type trialkoxysilane hydrolysables, présentant une quantité de fonctions silyle inférieure ou égale à 0,480 méq/g de polymère et répondant à la formule suivante :

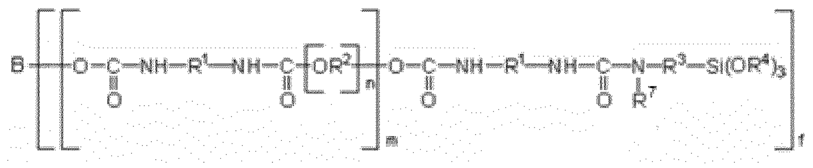
(Ibis)

le polymère de formule (IIbis) est un polyuréthane ou un polyéther comprenant deux ou trois groupements terminaux de type dialkoxysilane hydrolysables, présentant une quantité de fonctions silyle inférieure ou égale à 0,480 méq/g de polymère et répondant à la formule suivante :

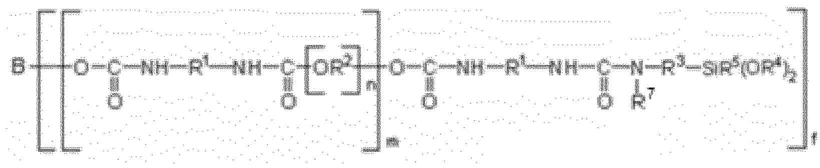
(IIbis)

le polymère de formule (IIIbis) est un polyuréthane ou un polyéther comprenant deux ou trois groupements terminaux de type monoalkoxysilane hydrolysables, présentant une quantité de fonctions silyle inférieure ou égale à 0,480 méq/g de polymère et répondant à la formule suivante :

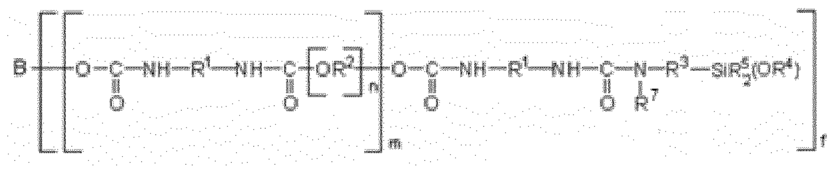
(IIIbis)

le polymère de formule (IVbis) est un polyuréthane ou un polyéther comprenant un groupement terminal de type mono-, di- et/ou trialkoxysilane hydrolysable, présentant une quantité de fonctions silyle inférieure ou égale à 0,480 méq/g de polymère et répondant à la formule suivante :

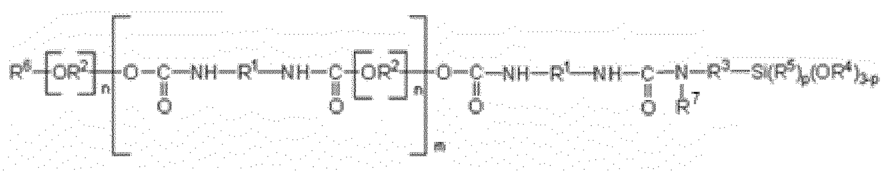
(IVbis)

dans les formules (Ibis), (IIbis), (IIIbis) et (IVbis) ci-dessus,

- B représente l'une des deux formules ci-dessous :

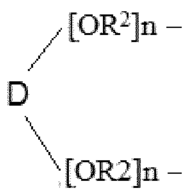

ou

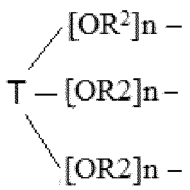

où D et T représentent un radical hydrocarboné comprenant de 2 à 66 atomes de carbone, linéaire, ramifié, cyclique, alicyclique ou aromatique, saturé ou insaturé, comprenant éventuellement un ou plusieurs hétéroatomes,

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone,
- $R^4$ et $R^5$, identiques ou différents, représentent chacun un radical alkyl linéaire ou ramifié comprenant de 1 à 4 atomes de carbone, $R^4$ pouvant éventuellement être engagé dans un cycle,
- $R^6$ représente un radical hydrocarboné comprenant de 1 à 22 atomes de carbone, linéaire, ramifié, cyclique, alicyclique ou aromatique, saturé ou insaturé, comprenant éventuellement un ou plusieurs hétéroatomes,
- $R^7$ représente un atome d'hydrogène, un radical phényle ou un radical alkyle linéaire, ramifié ou cyclique comprenant de 1 à 10 atomes de carbone,
- n est un nombre entier tel que la masse molaire moyenne du bloc polyéther de formule $-[OR^2]_n-$ va de 300 g/mole à 40000 g/mole,
- m est un nombre entier tel que la masse molaire moyenne du polymère va de 600 g/mole à 100000 g/mole,
- p est un nombre entier égal à 0, 1 ou 2,
- f est un nombre entier égal à 2 ou 3.

Selon un mode de réalisation, le mélange d'au moins deux polymères comprend :

- au moins un polymère répondant à l'une des formules (Ibis), (IIbis), (IIIbis) ou (IVbis) décrites ci-dessus, et
- au moins un polymère répondant à l'une des formules (I), (II), (III) ou (IV) ci-dessous :

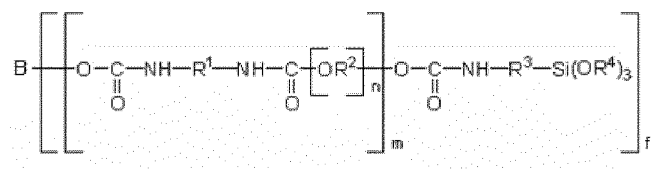

(I)

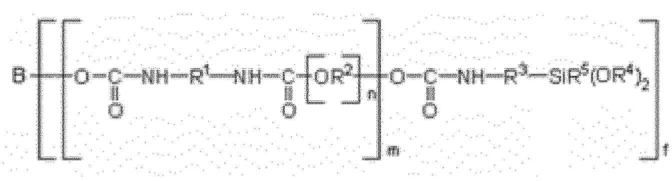

(II)

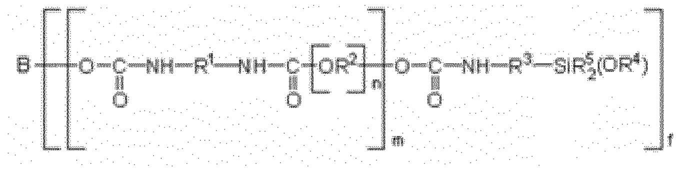

(III)

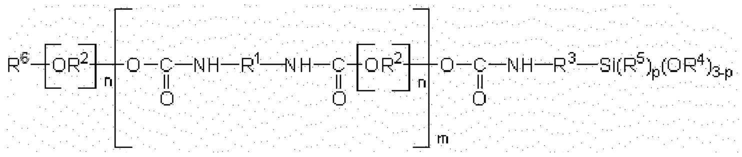

(IV)

étant entendu que :

- lorsqu'un polymère de formule (IIIbis) et/ou (III) est présent, ledit mélange comprend jusqu'à 15% en poids de polymère de formule (IIIbis) et/ou (III), par rapport au poids total du mélange de polymères,
- lorsqu'un polymère de formule (IVbis) et/ou (IV) est présent, ledit mélange comprend jusqu'à 15% en poids de polymère de formule (IVbis) et/ou (IV), par rapport au poids total du mélange de polymères ;

dans les formules (I), (II), (III), et (IV) ci-dessus,

- B représente l'une des deux formules ci-dessous :

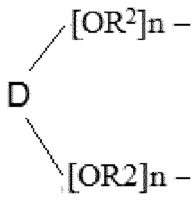

ou

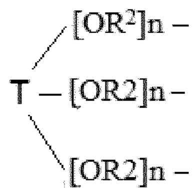

où D et T représentent un radical hydrocarboné comprenant de 2 à 66 atomes de carbone, linéaire, ramifié, cyclique, alicyclique ou aromatique, saturé ou insaturé, comprenant éventuellement un ou plusieurs hétéroatomes,

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone,
- $R^4$ et $R^5$, identiques ou différents, représentent chacun un radical alkyl linéaire ou ramifié comprenant de 1 à 4 atomes de carbone, $R^4$ pouvant éventuellement être engagé dans un cycle,
- $R^6$ représente un radical hydrocarboné comprenant de 1 à 22 atomes de carbone, linéaire, ramifié, cyclique, alicyclique ou aromatique, saturé ou insaturé, comprenant éventuellement un ou plusieurs hétéroatomes,
- n est un nombre entier tel que la masse molaire moyenne du bloc polyéther de formule $-[OR^2]_n-$ va de 300 g/mole à 40000 g/mole,
- m est un nombre entier tel que la masse molaire moyenne du polymère va de 600 g/mole à 100000 g/mole,
- p est un nombre entier égal à 0, 1 ou 2,
- f est un nombre entier égal à 2 ou 3.

De préférence, la couche support présente un module d'Young inférieur ou égal à 300 MPa.

Selon un mode de réalisation de l'invention, la couche support est sous la forme d'une mousse.

Selon un mode de réalisation de l'invention, la couche support se présente sous la forme d'une ou plusieurs couches polymériques.

De préférence, la composition adhésive comprend :

- de 20 à 85% en poids, par rapport au poids total de la composition adhésive, d'au moins un polymère ou un mélange de polymères tel que défini dans l'invention,
- de 15 à 80% en poids, par rapport au poids total de la composition adhésive, d'au moins une résine tackifiante,
- de 0,01 à 3% en poids, par rapport au poids total de la composition adhésive, d'au moins un catalyseur de réticulation.

De préférence, la résine tackifiante présente une masse molaire moyenne en nombre allant de 100 Da à 5 kDa et est choisie parmi :

(i) les résines susceptibles d'être obtenues par polymérisation d'hydrocarbures terpéniques et de phénols, en présence de catalyseurs de Friedel-Crafts,
(ii) les résines susceptibles d'être obtenues par polymérisation d'alpha-méthyl styrène,
(iii) les colophanes d'origine naturelle ou modifiées,
(iv) les résines obtenues par hydrogénation, polymérisation ou copolymérisation de mélanges d'hydrocarbures aliphatiques insaturés ayant environ 5, 9 ou 10 atomes de carbone issus de coupes pétrolières,
(v) les résines terpéniques résultant généralement de la polymérisation d'hydrocarbures terpéniques en présence de catalyseurs de Friedel-Crafts,
(vi) les copolymères à base de terpènes naturels, et
(vii) les résines acryliques.

Un autre objet de la présente invention concerne un mélange de polymères susceptible d'être utilisé dans la composition adhésive telle que définie ci-dessus, ledit mélange comprenant au moins deux polymères appartenant à 2 groupes différents choisis parmi les groupes P1, P2, P3 et P4, ledit mélange comprenant au moins un polymère répondant à l'une des formules (Ibis), (IIbis), (IIIbis) et (IVbis) et présentant une quantité de fonctions silyle inférieure ou égale à 0,480 méq/g de polymère,
étant entendu que :

- lorsqu'un polymère du groupe P3 est présent, le mélange comprend jusqu'à 15% en poids, par rapport au poids total du mélange, d'au moins un polyuréthane ou au moins un polyéther du groupe P3 ;
- lorsqu'un polymère du groupe P4 est présent, le mélange comprend jusqu'à 15% en poids, par rapport au poids total du mélange de polymères, d'au moins un polyuréthane ou au moins un polyéther du groupe P4 ;

P1 étant un groupe constitué par les polyuréthanes et les polyéthers présentant deux ou trois groupes terminaux de type trialkoxysilane ;
P2 étant un groupe constitué par les polyuréthanes et les polyéthers présentant deux ou trois groupes terminaux de type dialkoxysilane
P3 étant un groupe constitué par les polyuréthanes et les polyéthers présentant deux ou trois groupes terminaux de type monoalkoxysilane ;
P4 étant un groupe constitué par les polyuréthanes et les polyéthers présentant un groupe terminal de type mono-, di- ou tri-alkoxysilane.

Selon un mode de réalisation de l'invention, le mélange de polymères comprend :

- jusqu'à 95% en poids, par rapport au poids total du mélange, d'au moins un polymère répondant à la formule (Ibis), et
- au moins un polymère répondant à la formule (IIbis) tel que décrit dans la revendication 1.

Selon un mode de réalisation de l'invention, le mélange de polymères comprend :

- de 10 à 85% en poids d'au moins un polymère répondant à la formule (Ibis), et
- de 15 à 90% en poids d'au moins un polymère répondant à la formule (IIbis), par rapport au poids total du mélange, d'au moins deux polymères.

Selon un mode de réalisation de l'invention, le mélange de polymères comprend :

- jusqu'à 15% en poids, par rapport au poids total du mélange, d'au moins un polymère répondant à la formule (IIIbis), et
- au moins un polymère répondant à la formule (IIbis) tel que décrit dans la revendication 1.

Selon un mode de réalisation de l'invention, le mélange de polymères comprend :

- de 5 à 95% en poids d'au moins un polymère répondant à la formule (Ibis), et
- de 5 à 15% en poids d'au moins un polymère répondant à la formule (IIIbis), par rapport au poids total dudit mélange.

Selon un mode de réalisation de l'invention, le mélange de polymères comprend :

- au moins un polymère répondant à l'une des formules (Ibis), (IIbis), (IIIbis) ou (IVbis) décrites ci-dessus, et
- au moins un polymère répondant à l'une des formules (I), (II), (III) ou (IV) décrites ci-dessus.

La présente invention concerne également une composition adhésive susceptible d'être utilisée pour la fabrication de l'article auto-adhésif selon l'invention, comprenant :

- le mélange de polymères selon l'invention,
- au moins une résine tackifiante, et
- au moins un catalyseur de réticulation.

De préférence, la composition adhésive selon l'invention comprend :

- de 20 à 85% en poids, par rapport au poids total de la composition adhésive, dudit mélange de polymères,
- de 15 à 80% en poids, par rapport au poids total de la composition adhésive, d'au moins une résine tackifiante,
- de 0,01 à 3% en poids, par rapport au poids total de la composition adhésive, d'au moins un catalyseur de réticulation.

Les avantages de la présente invention sont les suivants :

- l'article auto-adhésif selon l'invention présente d'excellentes propriétés de pouvoir adhésif et de tack ;
- l'article auto-adhésif selon l'invention présente une résistance au cisaillement élevée ;
- l'article auto-adhésif selon l'invention est tel que le joint de colle résultant de sa fixation sur un substrat garde la cohésion requise sur un large domaine de température ;
- l'article auto-adhésif selon l'invention peut être appliqué sur de nombreuses surfaces, telles que le béton, les matériaux plastiques ou métalliques, les carrosseries automobiles et les matériaux peints ;
- la couche support présente dans l'article auto-adhésif selon l'invention permet de coller l'article auto-adhésif sur tous types de surface, en particulier les surfaces présentant des irrégularités ;
- l'article auto-adhésif selon l'invention permet de gommer des irrégularités de surface, le défaut de parallélisme de deux surfaces à coller ;
- l'article auto-adhésif selon l'invention peut être appliqué sur des surfaces complexes, courbées ;
- l'article auto-adhésif selon l'invention permet d'assurer une bonne isolation thermique et phonique grâce aux propriétés de la couche support, en particulier grâce à la couche support sous la forme d'une mousse.

## DESCRIPTION DETAILLEE DE L'INVENTION

### Article auto-adhésif

La présente invention concerne un article auto-adhésif comprenant une couche support revêtue d'une couche adhésive, ladite couche support présentant une élongation à la rupture allant de 50 à 1200% et une densité apparente allant de 25 à 1200 kg/m$^3$, ladite couche adhésive est obtenue par réticulation d'une composition adhésive comprenant :

a) au moins un polymère de formule (Ibis) ou au moins un polymère de formule (IIbis) ou un mélange d'au moins deux polymères choisis parmi les polyuréthanes et les polyéthers présentant un, deux ou trois groupements terminaux de type mono-, di- ou tri-alkoxysilane, ledit mélange comprenant au moins un polymère répondant à l'une des formules (Ibis), (IIbis), (IIIbis) et (IVbis),
étant entendu que:

- lorsqu'un polymère présentant deux ou trois groupements terminaux de type monoalkoxysilane est présent, ledit mélange comprend jusqu'à 15% en poids, par rapport au poids total du mélange, dudit polymère,

- lorsqu'un polymère présentant un groupement terminal de type mono-, di- ou tri-alkoxysilane est présent, ledit mélange comprend jusqu'à 15% en poids, par rapport au poids total du mélange, dudit polymère,

b) au moins une résine tackifiante, et
c) au moins un catalyseur de réticulation.

Le polymère de formule (Ibis) est un polyuréthane ou un polyéther comprenant deux ou trois groupements terminaux de type trialkoxysilane hydrolysables, présentant une quantité de fonctions silyle inférieure ou égale à 0,480 méq/g de polymère et répondant à la formule suivante :

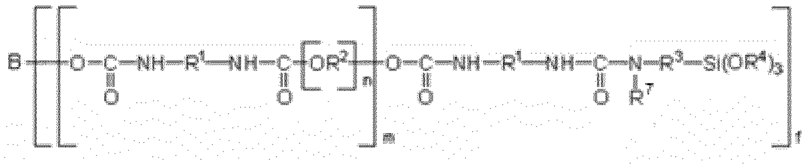

(Ibis)

Le polymère de formule (IIbis) est un polyuréthane ou un polyéther comprenant deux ou trois groupements terminaux de type dialkoxysilane hydrolysables, présentant une quantité de fonctions silyle inférieure ou égale à 0,480 méq/g de polymère et répondant à la formule suivante :

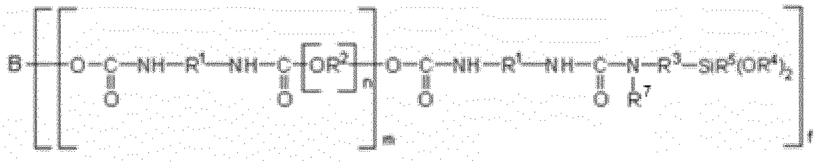

(IIbis)

Le polymère de formule (IIIbis) est un polyuréthane ou un polyéther comprenant deux ou trois groupements terminaux de type monoalkoxysilane hydrolysables, présentant une quantité de fonctions silyle inférieure ou égale à 0,480 méq/g de polymère et répondant à la formule suivante :

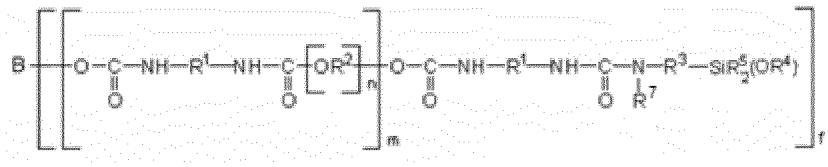

(IIIbis)

Le polymère de formule (IVbis) est un polyuréthane ou un polyéther comprenant un groupement terminal de type mono-, di- et/ou trialkoxysilane hydrolysable, présentant une quantité de fonctions silyle inférieure ou égale à 0,480 méq/g de polymère et répondant à la formule suivante :

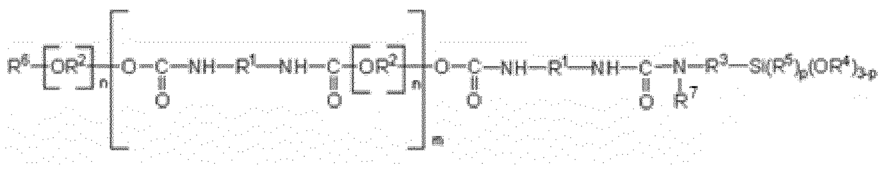

(IVbis)

dans les formules (Ibis), (IIbis), (IIIbis) et (IVbis) ci-dessus,

- B représente l'une des deux formules ci-dessous :

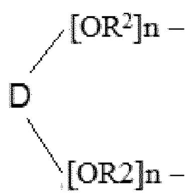

ou

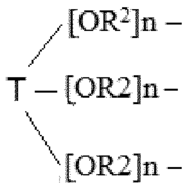

où D et T représentent un radical hydrocarboné comprenant de 2 à 66 atomes de carbone, linéaire, ramifié, cyclique, alicyclique ou aromatique, saturé ou insaturé, comprenant éventuellement un ou plusieurs hétéroatomes,

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone,
- $R^4$ et $R^5$, identiques ou différents, représentent chacun un radical alkyl linéaire ou ramifié comprenant de 1 à 4 atomes de carbone, $R^4$ pouvant éventuellement être engagé dans un cycle,
- $R^6$ représente un radical hydrocarboné comprenant de 1 à 22 atomes de carbone, linéaire, ramifié, cyclique, alicyclique ou aromatique, saturé ou insaturé, comprenant éventuellement un ou plusieurs hétéroatomes,
- $R^7$ représente un atome d'hydrogène, un radical phényle ou un radical alkyle linéaire, ramifié ou cyclique comprenant de 1 à 10 atomes de carbone,
- n est un nombre entier tel que la masse molaire moyenne du bloc polyéther de formule $-[OR^2]_n-$ va de 300 g/mole à 40000 g/mole,
- m est un nombre entier tel que la masse molaire moyenne du polymère va de 600 g/mole à 100000 g/mole,
- p est un nombre entier égal à 0, 1 ou 2,
- f est un nombre entier égal à 2 ou 3.

Dans le cas où la composition adhésive comprend au moins deux polymères de formules différentes, chaque paramètre défini ci-dessus B, $R^1$, $R^2$, $R^3$, $R^4$, $R^5$, $R^6$, n, m, p et f peuvent être choisis de façon indépendante dans chacune des formules, c'est-à-dire qu'ils sont identiques ou différents dans chacun des polymères.

A titre d'exemple, B peut présenter la structure suivante (dans cet exemple f sera alors égal à 2) :

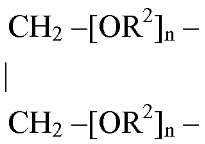

ou la structure suivante (dans cet exemple f sera alors égal à 3) :

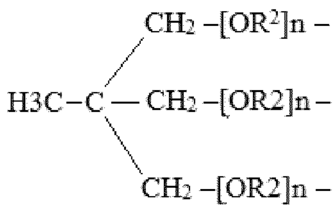

A titre d'exemple, $R^6$ peut être un radical méthyle.

De préférence, $R^1$ est choisi parmi l'un des radicaux divalents suivants dont les formules ci-dessous font apparaître les 2 valences libres :

a) le radical divalent dérivé de l'isophorone :

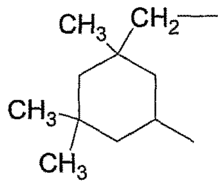

b)

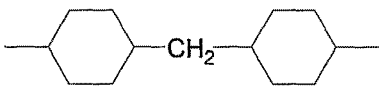

c)

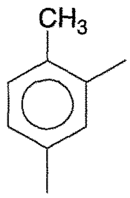

ou

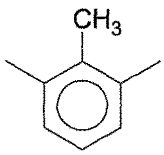

e) $-(CH_2)_6-$ (ou radical hexaméthylène).

Couche support

La couche support présente une élongation à la rupture allant de 50% à 1200%, de préférence allant de 100% à 1000%, de préférence encore de 200% à 700%, et une densité apparente allant de 25 à 1200 kg/$m^3$, de préférence allant de 25 à 1000 kg/$m^3$, de préférence encore de 25 à 900 kg/$m^3$, de préférence encore de 32 à 800 kg/$m^3$, de préférence encore de 50 à 600 kg/$m^3$, de préférence encore de 60 à 400 kg/$m^3$.

L'élongation à la rupture peut être mesurée selon la norme ISO 1926 à 23°C, dans le sens de la longueur ou de la largeur. De préférence, l'élongation est mesurée dans le sens de la longueur.

La densité apparente peut être mesurée selon la norme ISO 845.

Des charges peuvent être ajoutées lors de la fabrication de la couche support afin d'obtenir une couche support présentant une densité apparente supérieure ou égale à 1000 kg/$m^3$. L'homme du métier sait comment augmenter la densité apparente d'un matériau tout en maintenant les propriétés d'élongation à la rupture souhaitées.

De préférence, la couche support présente un module d'Young inférieur ou égal à 300 MPa, de préférence allant de 2 à 100 MPa, de préférence encore allant de 5 à 50 MPa, plus particulièrement allant de 5 à 35 MPa.

De préférence, la couche support présente une épaisseur allant de 0,01 à 50 mm, de préférence encore allant de 0,01 à 20,00 mm, de préférence allant de 0,05 à 10,00 mm, de préférence encore allant de 0,05 à 1,00 mm, avantageusement allant de 0,10 à 0,75 mm.

La couche support se trouve sous la forme d'une mousse.

Au sens de la présente invention, une mousse est un matériau polymérique comprenant des cellules remplies de gaz. La mousse peut être à cellules fermées ou cellules ouvertes, la structure de la mousse dépendant du procédé

d'expansion de la mousse.

De préférence, la surface extérieure de la couche support en contact avec la composition adhésive est fermée, c'est-à-dire que les cellules présentes à la surface en contact avec la composition adhésive sont toutes des cellules fermées.

De préférence, l'ensemble de la couche support est une mousse à cellules fermées.

De préférence, la surface extérieure de la couche support en contact avec la composition adhésive est fermée, c'est-à-dire que les cellules présentes à la surface en contact avec la composition adhésive sont toutes des cellules fermées.

De préférence, l'ensemble de la couche support est une mousse à cellules fermées.

Selon un premier mode de réalisation, la couche support est en matériau choisi parmi :

- les polyoléfines, telles que le polyéthylène, dont le polyéthylène haute densité, le polyéthylène faible densité, le polyéthylène faible densité linéaire et le polyéthylène ultra faible densité linéaire, le polypropylène et les polybutylènes,
- le polystyrène,
- le caoutchouc naturel ou synthétique,
- les copolymères vinyliques, tels que le polychlorure de vinyle, plastifié ou non plastifié, et les poly(acétate de vinyle),
- les copolymères oléfiniques, tels que les copolymères éthylène/méthacrylate, les copolymères éthylène/acétate de vinyle, les copolymères acrylonitrile/butadiène/styrène, et les copolymères éthylène/propylène,
- les polymères et les copolymères acryliques,
- les polyuréthanes,
- les polyéthers,
- les polyesters, et

les mélanges de ceux-ci.

De préférence, la couche support comprend un mélange de matériaux élastomériques et/ou plastiques, tels que polypropylène/polyéthylène, polyuréthane/polyoléfines, polyuréthane/po lycarbonate, polyuréthane/po lyester.

De préférence, la couche support se présente sous la forme d'une ou plusieurs couches de mousse polymérique, de préférence sous forme d'une mousse de polyoléfine.

Parmi les mousses qui peuvent être utilisées pour former la couche support de l'article auto-adhésif selon l'invention, on peut citer :

- la mousse TL SRZ® 1200.8 (disponible auprès de Alveo) présentant une élongation en longueur à la rupture de 408,8 ± 53 % à 23°C, une densité apparente d'environ 96,62 kg/$m^3$, une épaisseur d'environ 0,67 mm et un module d'Young de 11,2 ± 0,5 MPa ;
- la mousse TEE® 0400.2 (disponible auprès de Alveo) présentant une élongation en longueur à la rupture de 362,5 ± 85 % à 23°C, une densité apparente d'environ 293 kg/$m^3$, une épaisseur d'environ 0,17 mm et un module d'Young de 18,3 ± 0,6 MPa ;
- la mousse TMA SRZ® 0500.8 (disponible auprès de Alveo) présentant une élongation en longueur à la rupture de 717,5 ± 117 % à 23°C, une densité apparente d'environ 196,31 kg/$m^3$, une épaisseur d'environ 0,72 mm et un module d'Young de 6,7 ± 0,8 MPa ; et
- la mousse TL SRZ® 0700.8 (disponible auprès de Alveo) présentant une élongation en longueur à la rupture de 635,4 ± 76 % à 23°C, une densité apparente d'environ 148,15 kg/$m^3$, une épaisseur d'environ 0,76 mm et un module d'Young de 12,9 ± 0,8 MPa.

Selon un mode de réalisation, la couche support est une mousse syntactique. La technologie des mousses syntactiques est décrite par exemple dans la publication de Klempner et al., Polymeric foam technology, seconde édition Hanser (2004), page 479.

La composition adhésive est appliquée sur le support pour la fabrication d'un article auto-adhésif.

La couche support peut être recouverte sur une de ses deux faces, la face arrière qui n'est pas revêtue de la couche adhésive, par une couche protectrice anti-adhérente, par exemple par un film siliconé. De cette façon, l'article auto-adhésif peut être enroulé sur lui-même puis déroulé sans problème grâce à l'absence d'adhésion de la couche adhésive sur la face siliconée.

La couche support selon l'invention peut également être traitée par tous types de traitement de surface, tel qu'un traitement corona permettant notamment d'augmenter la mouillabilité.

Composition adhésive

La couche adhésive est obtenue par réticulation de la composition adhésive.

Comme indiqué ci-dessus, la couche support peut également être obtenue par expansion d'une matrice comprenant la composition adhésive selon l'invention, pour l'obtention d'une mousse dite syntactique.

La composition adhésive utilisée dans l'article auto-adhésif de l'invention comprend :

a) un polymère ou un mélange de polymères tel que décrit ci-dessous pour l'article auto-adhésif,
b) au moins une résine tackifiante,
c) au moins un catalyseur de réticulation.

Selon un mode de réalisation, la composition adhésive utilisée dans l'article auto-adhésif de l'invention consiste essentiellement en :

a) un polymère ou un mélange de polymères tel que décrit ci-dessous pour l'article auto-adhésif,
b) au moins une résine tackifiante, et
c) au moins un catalyseur de réticulation.

Le polymère peut être un polymère de formule (Ibis) ou un polymère de formule (IIbis).

Le mélange d'au moins deux polymères présent dans la composition adhésive utilisée pour la fabrication de l'article auto-adhésif comprend au moins deux polymères différents choisis parmi les polyuréthanes et les polyéthers présentant un, deux ou trois groupements terminaux de type mono-, di- ou tri-alkoxysilane, ledit mélange comprenant au moins un polymère de formule (Ibis), (IIbis), (IIIbis) ou (IVbis).

Lorsqu'un polymère présentant deux ou trois groupements terminaux de type monoalkoxysilane est présent dans le mélange d'au moins deux polymères, ledit mélange comprend jusqu'à 15% en poids dudit polymère, par rapport au poids total du mélange.

Lorsqu'un polymère présentant un groupement terminal de type mono-, di- ou tri-alkoxysilane est présent dans le mélange d'au moins deux polymères, ledit mélange comprend jusqu'à 15% en poids dudit polymère, par rapport au poids total du mélange.

La quantité de fonctions silyle est donnée par les fournisseurs ou bien peut être déterminée par analyse (RMN) ou bien, elle peut être déterminée en fonction de la teneur (% massique) et de la nature (structure chimique et masse molaire) des aminosilanes utilisés pour la synthèse des polymères (Ibis), (IIbis), (IIIbis) et (IVbis).

Les polymères répondant à l'une des formules (Ibis), (IIbis), (IIIbis) et (IVbis) peuvent être obtenus selon un procédé tel que décrit dans la partie expérimentale de la présente invention avec éventuellement une substitution totale ou partielle des polyéthers diols par des polyéthers monols dans les polymères (IVbis).

De préférence, le polymère ou le mélange de polymères utilisé pour la fabrication de l'article auto-adhésif selon l'invention présente une masse molaire moyenne en nombre allant de 600 à 100000 g/mole, de préférence encore de 1000 à 50000 g/mole, de préférence encore de 2000 à 20000 g/mole.

La masse molaire moyenne en nombre (Mn) exprimée en g/mol est calculée à partir de la quantité de fonctions silyle (E(s)) exprimée en méq/g et de la fonctionnalité F du polymère.

La fonctionnalité F est égale à 2 ou 3 pour les polymères de formules (Ibis), (IIbis) et (IIIbis).

La fonctionnalité F est égale à 1 pour les polymères de formule (IVbis).

La masse molaire moyenne en nombre est calculée de la façon suivante:

$$Mn = \frac{F \times 1000}{E(s)}$$

Parmi les polymères selon l'invention répondant à la formule (Ibis), on peut citer les polymères Ex19 et Ex20 décrits dans la partie expérimentale.

Parmi les polymères selon l'invention répondant à la formule (IIbis), on peut citer le polymère Ex8 et le polymère Ex6-18 décrits dans la partie expérimentale.

Parmi les polymères selon l'invention répondant à la formule (IIIbis), on peut citer le polymère Ex15 décrit dans la partie expérimentale.

De préférence, tous les polymères du mélange de polymères pouvant être utilisé pour la fabrication de l'article auto-adhésif selon l'invention présentent une quantité de fonctions silyle inférieure ou égale à 0,480 méq/g de polymère, de préférence inférieure ou égale à 0,450 méq/g.

Selon un mode de réalisation, le mélange d'au moins deux polymères comprend au moins deux polymères

choisis parmi les polymères de formule (Ibis), (IIbis), (IIIbis) et (IVbis).

Selon un autre mode de réalisation, le mélange d'au moins deux polymères comprend au moins un polyuréthane ou un polyéther présentant un, deux ou trois groupements terminaux de type mono-, di- ou tri-alkoxysilane différent des polyuréthanes et des polyéthers de formule (Ibis), (IIbis), (IIIbis) ou (IVbis).

De préférence, le polyuréthane ou le polyéther présentant un, deux ou trois groupements terminaux de type mono-, di- ou tri-alkoxysilane différent des polyuréthanes et des polyéthers de formule (Ibis), (IIbis), (IIIbis) ou (IVbis) est choisi parmi :

- un polyuréthane ou un polyéther comprenant deux ou trois groupements terminaux de type dialkoxysilane hydrolysables et répondant à la formule (II) :

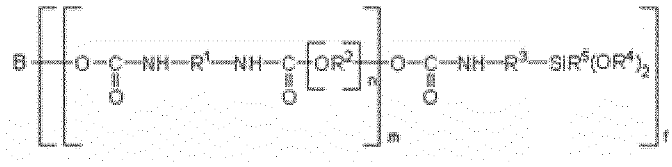

(II)

- un polyuréthane ou un polyéther comprenant deux ou trois groupements terminaux de type trialkoxysilane hydrolysables et répondant à la formule (I) :

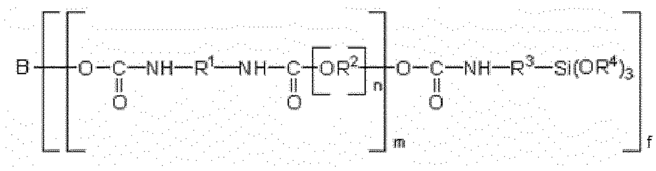

(I)

- un polyuréthane ou un polyéther comprenant deux ou trois groupements terminaux de type monoalkoxysilane hydrolysables et répondant à la formule (III) :

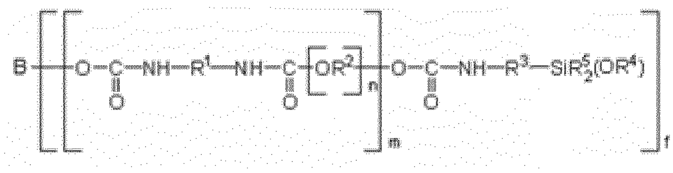

(III)

- un polyuréthane ou un polyéther comprenant un groupement terminal de type mono-, di- et/ou trialkoxysilane hydrolysable et répondant à la formule (IV) :

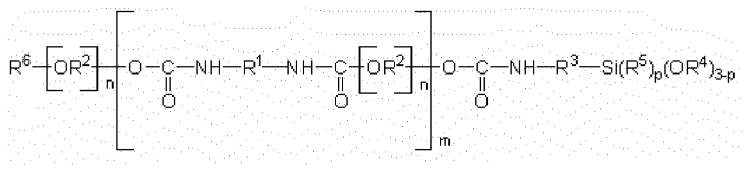

(IV)

Dans les formules (I), (II), (III), et (IV) ci-dessus,

- B représente l'une des deux formules ci-dessous :

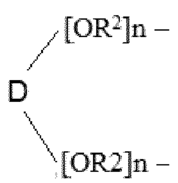

ou

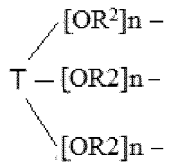

où D et T représentent un radical hydrocarboné comprenant de 2 à 66 atomes de carbone, linéaire, ramifié, cyclique, alicyclique ou aromatique, saturé ou insaturé, comprenant éventuellement un ou plusieurs hétéroatomes, tels que oxygène, soufre, azote ou halogène,

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone, et de préférence 3 atomes de carbone,
- $R^4$ et $R^5$, identiques ou différents, représentent chacun un radical alkyl linéaire ou ramifié comprenant de 1 à 4 atomes de carbone, $R^4$ pouvant éventuellement être engagé dans un cycle,
- $R^6$ représente un radical hydrocarboné comprenant de 1 à 22 atomes de carbone, linéaire, ramifié, cyclique, alicyclique ou aromatique, saturé ou insaturé, comprenant éventuellement un ou plusieurs hétéroatomes, tels que oxygène, soufre, azote ou halogène,
- n est un nombre entier tel que la masse molaire moyenne du bloc polyéther de formule $-[OR^2]_n-$ va de 300 g/mole à 40000 g/mole,
- m est un nombre entier tel que la masse molaire moyenne du polymère va de 600 g/mole à 100000 g/mole,
- p est un nombre entier égal à 0, 1 ou 2,
- f est un nombre entier égal à 2 ou 3.

Les polymères répondant à l'une des formules (I), (II), (III) et (IV) peuvent être obtenus selon un procédé décrit dans les demandes EP 2 336 208 et WO 2009/106699 avec éventuellement une substitution totale ou une substitution partielle des polyéthers diols par des polyéthers monols dans les polymères de formule (IV).

Selon un mode de réalisation, le mélange d'au moins deux polymères utilisé pour la fabrication de l'article auto-adhésif comprend :

- de 5 à 95% en poids, de préférence de 10 à 90% en poids, d'au moins un polymère choisi parmi les polymères de formule (Ibis), (IIbis), (IIIbis) ou (IVbis) ; et
- de 5 à 95% en poids, de préférence de 10 à 90% en poids, d'au moins un autre polymère silylé, de préférence choisi parmi les polymères de formule (I), (II), (III) ou (IV); par rapport au poids total du mélange de polymères.

Selon un mode de réalisation, la résine tackifiante présente une masse molaire moyenne en nombre allant de 100 Da à 5 kDa, de préférence de 500 Da à 4 kDa.

Selon un mode de réalisation, la résine tackifiante est choisie parmi :

(i) les résines susceptibles d'être obtenues par polymérisation d'hydrocarbures terpéniques et de phénols, en présence de catalyseurs de Friedel-Crafts,
(ii) les résines susceptibles d'être obtenues par polymérisation d'alpha-méthyl styrène, éventuellement par réaction avec des phénols,
(iii) les colophanes d'origine naturelle ou modifiées, telles que la colophane extraite de la gomme de pins, la colophane de bois extraite des racines de l'arbre et leurs dérivés hydrogénés, dimérisés, polymérisés ou estérifiés par des monoalcools ou des polyols comme le glycérol,
(iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières,
(v) les résines terpéniques résultant généralement de la polymérisation d'hydrocarbures terpéniques, comme le mono-terpène (ou pinène) en présence de catalyseurs de Friedel-Crafts,
(vi) les copolymères à base de terpènes naturels, par exemple le styrène/terpène, l'alpha-méthyl styrène/terpène et le vinyl toluène/terpène, et
(vii) les résines acryliques.

De telles résines sont disponibles commercialement et parmi celles de type (i), (ii) et (iii) définis ci-dessus, on peut citer les produits suivants :

résines de type (i) : Dertophène® 1510 disponible auprès de la société DRT possédant une masse molaire en nombre Mn d'environ 870 Da ; Dertophène® H150 disponible auprès de la même société de masse molaire Mn égale à environ 630 Da ; Sylvarez® TP 95 disponible auprès de la société Arizona Chemical ayant une masse molaire moyenne en nombre Mn d'environ 1200 Da ;

résines de type (ii) : Norsolène® W100 disponible auprès de la société Cray Valley, qui est obtenue par polymérisation d'alpha-méthyl styrène sans action de phénols, avec une masse molaire moyenne en nombre de 900 Da ; Sylvarez® 510 qui est également disponible auprès de la société Arizona Chemical avec une masse molaire moyenne en nombre Mn d'environ 1740 Da, dont le procédé d'obtention comprend également l'ajout de phénols ;

résines de type (iii) : Sylvalite® RE 100 qui est un ester de colophane et de pentaérythritol disponible auprès de la société Arizona Chemical et de masse molaire moyenne en nombre Mn environ 1700 Da.

Les masses molaires moyennes en nombre des résines peuvent être mesurées selon des méthodes bien connues de l'homme du métier, par exemple par chromatographie d'exclusion stérique en utilisant un étalon de type polystyrène.

Selon une variante préférée, on utilise comme résine tackifiante une résine choisie parmi celles de type (i) ou (ii). Selon une autre variante préférée, on utilise comme résine tackifiante une résine de type (iii) et de préférence un ester de colophane.

Le catalyseur de réticulation utilisé dans la composition adhésive selon l'invention peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR® AA75 auprès de la société DuPont), de l'aluminium comme le chélate d'aluminium (disponible commercialement sous la dénomination K-KAT® 5218 auprès de la société King Industries), des amines comme le 1,8-diazobicyclo (5.4.0) undécène-7 ou DBU.

De préférence, la composition adhésive comprend moins de 5% en poids de solvant, de préférence moins de 3% en poids, de préférence encore moins de 1% en poids, idéalement moins de 0,5% en poids, par rapport au poids total de la composition adhésive avant réticulation des fonctions silylées.

A titre optionnel, la composition selon l'invention peut également inclure, en combinaison avec le polymère ou le mélange de polymères décrit ci-dessus, des polymères thermoplastiques souvent utilisés dans la préparation des HMPSA, tels que l'Ethylène Vinyl Acétate (EVA) ou des copolymères blocs styréniques.

La composition adhésive peut en outre comprendre jusqu'à 3 % en poids d'un dérivé alkoxysilane hydrolysable, en tant qu'agent dessicant, et de préférence un dérivé de triméthoxysilane. Un tel agent prolonge avantageusement la durée de conservation de la composition selon l'invention durant le stockage et le transport, avant son utilisation. On peut citer par exemple le gamma-méthacryloxypropyltriméthoxysilane disponible sous la dénomination commerciale SILQUEST® A-174 auprès de la société US Momentive Performance Materials Inc.

La composition selon l'invention peut aussi inclure un plastifiant tel qu'un phtalate ou un benzoate, une huile paraffinique et naphténique (comme le Primol® 352 de la société ESSO) ou encore une cire d'un homopolymère de polyéthylène (comme l'A-C® 617 de Honeywell), ou une cire d'un copolymère de polyéthylène et d'acétate de vinyle, ou encore des pigments, des colorants ou des charges.

Enfin, une quantité de 0,1 à 2 % en poids d'un ou plusieurs stabilisants (ou anti-oxydants) est de préférence incluse dans la composition selon l'invention. Ces composés sont introduits pour protéger la composition d'une dégradation résultant d'une réaction avec de l'oxygène qui est susceptible de se former par action de la chaleur ou de la lumière. Ces composés peuvent inclure des anti-oxydants primaires qui piègent les radicaux libres et sont notamment des phénols substitués comme l'Irganox® 1076 de CIBA. Les anti-oxydants primaires peuvent être utilisés seuls ou en combinaison avec d'autres anti-oxydants secondaires ou des stabilisants UV.

Selon un mode de réalisation, la composition adhésive comprend :

a) de 20 à 85%, de préférence de 40 à 65%, en poids du polymère ou du mélange de polymères tel que décrit ci-dessus,
b) de 15% à 80%, de préférence de 25 à 70%, de préférence de 35 à 60%, en poids de résine(s) tackifiante(s), et
c) de 0,01 à 3% en poids de catalyseur(s) de réticulation,

par rapport au poids total de la composition adhésive.

Selon un mode de réalisation, la composition adhésive consiste essentiellement en :

a) de 20 à 85%, de préférence de 40 à 65%, en poids du polymère ou du mélange de polymère tel que décrit ci-dessus,
b) de 15% à 80%, de préférence de 25 à 70%, de préférence de 35 à 60%, en poids de résine(s) tackifiante(s), et
c) de 0,01 à 3% en poids de catalyseur(s) de réticulation,

par rapport au poids total de la composition adhésive.

La composition adhésive réticulable à chaud utilisée dans la fabrication de l'article auto-adhésif selon l'invention peut être préparée par un procédé qui comprend :

- une étape de mélange à l'abri de l'air, de préférence sous atmosphère inerte, du polymère ou du mélange de polymères avec la ou les résines tackifiantes, à une température comprise entre 30 et 170°C, de préférence entre 100 et 170°C, puis une étape de refroidissement dudit mélange à une température allant de 30 à 90°C, et avantageusement d'environ 70 °C, puis
- une étape d'incorporation dans le mélange obtenu à l'étape précédente du catalyseur de réticulation et, le cas échéant, de l'agent dessicant et des autres composants optionnels.

Selon un mode de réalisation de l'invention, la couche adhésive, après une réticulation au moins partielle des fonctions silylées, présente un pouvoir collant (« loop tack » en anglais) d'au moins 0,75 N/cm, de préférence d'au moins 0,80 N/cm, de préférence encore d'au moins 0,90 N/cm, idéalement d'au moins 1 N/cm, de préférence sans résidus, valeur mesurée sur une plaque de verre.
Selon un mode de réalisation de l'invention, la couche adhésive telle que décrite ci-dessus, peut présenter un pouvoir collant d'au moins 5 N/cm, de préférence d'au moins 6 N/cm, de préférence encore d'au moins 7 N/cm, idéalement d'au moins 8 N/cm. Selon un mode de réalisation, la composition adhésive selon l'invention peut présenter un pouvoir collant allant de 0,75 à 8 N/cm, de préférence de 0,80 à 7 N/cm, de préférence encore de 0,90 à 6 N/cm, idéalement de 1 à 5 N/cm. Ledit pouvoir collant peut être obtenu immédiatement après le collage de l'article sur une surface et/ou quelques heures après le collage de l'article sur une surface et/ou quelques jours après le collage de l'article sur une surface.

Au sens de la présente invention, le terme « article auto-adhésif » inclut tout article qui peut être collé sur une surface seulement par l'action d'une pression avec la main ou un équipement, sans l'utilisation de colles ou adhésifs supplémentaires. L'expression « article auto-adhésif » comprend également l'expression « article adhésif sensible à la pression » ou « article PSA » (« Pressure Sensitive Adhesive article » en anglais). Ces articles ont pour but d'être appliqués sur une surface à coller afin de rapprocher, de maintenir, de fixer, ou simplement d'immobiliser, d'exposer des formes, logos, images ou informations. Ces articles peuvent être utilisés dans de nombreux domaines, tels que le domaine médical, l'habillement, l'emballage, l'automobile ou la construction, grâce notamment à d'excellentes propriétés d'isolation thermique et phonique. Ils peuvent être façonnés en fonction de leur application finale, par exemple sous la forme de rubans, tels que les rubans à usage industriel, les rubans de bricolage ou à usage de fixation sur chantiers, les rubans simple ou double face, ou sous la forme d'étiquettes, de bandages, de pansements, de patchs ou de films graphiques.

L'article auto-adhésif selon l'invention peut être appliqué sur des surfaces présentant des irrégularités, sur des surfaces courbes ou complexes ou encore sur des surfaces déformables ou présentant des déformations. L'article selon l'invention peut permettre de coller deux surfaces non strictement planes. En particulier, la surface à coller peut présenter des propriétés comparables aux propriétés de la couche support.
La surface à coller peut être choisie parmi les plastiques, le béton, l'acier, le verre, le carton, la peau, les textiles, la mousse. La surface peut être peinte ou non peinte.

Selon un mode de réalisation de l'invention, l'article auto-adhésif comprend en outre une couche anti-adhérente protectrice (« release liner » en anglais).
Selon un mode de réalisation, ladite couche anti-adhérente est appliquée sur la couche adhésive, après réticulation de la composition adhésive.

Selon un premier mode de réalisation, l'article auto-adhésif selon l'invention peut être préparé par un procédé comprenant les étapes suivantes :

(a) le conditionnement de la composition adhésive telle que définie précédemment à une température allant de 20 à 160°C ; puis
(b) l'enduction par la composition adhésive obtenue à l'étape (a) d'une surface porteuse ; puis
(c) la réticulation de la composition adhésive enduite, par chauffage de la surface porteuse enduite à une température allant de 20 à 200°C ;
éventuellement
(d) le contre collage ou le transfert de la couche adhésive réticulée sur une couche support ou sur un film protecteur anti-adhérent.

Par « surface porteuse » au sens de la présente invention, il faut comprendre soit un convoyeur à bande recouvert d'une couche anti-adhérente, soit un film protecteur anti-adhérent (« release liner » en anglais), soit une couche support.

Dans le cas où la surface porteuse n'est pas une couche support, le procédé d'obtention de l'article auto-adhésif selon l'invention comprend l'étape (d) de transfert de la couche adhésive réticulée sur une couche support.

Dans le cas où la surface porteuse est une couche support, le procédé d'obtention de l'article auto-adhésif selon l'invention peut comprendre l'étape (d) de contre collage de la couche adhésive sur un film protecteur anti-adhérent.

Selon un mode de réalisation, le procédé de fabrication de l'article auto-adhésif selon l'invention comprend en outre une étape (e) d'enduction d'une seconde couche de composition adhésive sur la couche support suivie d'une étape (f) de réticulation de la composition adhésive enduite à l'étape (e) par chauffage à une température allant de 20 à 200°C. Selon ce mode de réalisation, un article auto-adhésif double face est obtenu.

L'étape (b) d'enduction peut être réalisée au moyen de dispositifs d'enduction connus, comme par exemple une buse à lèvre ou de type rideau, ou encore au rouleau. Elle met en oeuvre un grammage de composition adhésive allant de 3 à 2000 g/$m^2$, de préférence de 5 à 500 g/$m^2$, de préférence encore de 10 à 250 g/$m^2$.

De préférence, l'enduction est continue ou pratiquement continue.

Selon un mode de réalisation, la composition adhésive enduite est en outre soumise, lors de l'étape (c) à un traitement dans une atmosphère humide caractérisée par son niveau d'humidité. De préférence, l'atmosphère humide est une atmosphère dans laquelle de 2 à 100% des molécules sont des molécules d'eau, de préférence de 4 à 50%, de préférence encore de 5 à 10% des molécules sont des molécules d'eau.

Le taux d'humidité est exprimé en pourcentage d'eau par unité de volume, ce qui correspond au nombre de molécules d'eau divisé par le nombre total de molécules dans une unité de volume. Grâce à la nature linéaire de cette échelle, le taux d'humidité est facilement mesuré et contrôlé en utilisant par exemple des moniteurs de type P.I.D (« Proportional-Integral-Derivative »). Le pourcentage en poids peut être calculé en multipliant le pourcentage du nombre de molécules d'eau par rapport au nombre total de molécules par un facteur de 0,622. Des informations générales sur le taux d'humidité dans divers environnements sont décrites par W. Wagner et al., dans "International Steam Tables - Properties of Water and Steam based on the Industrial Formulation IAPWS-IF97*".*

Le temps nécessaire à la réticulation de l'étape (c) peut varier dans de larges limites, par exemple entre 1 seconde et 10 minutes, en fonction du grammage de composition adhésive déposé sur la surface porteuse, de la température de chauffage, et de l'humidité.

Cette étape de réticulation thermique a pour effet la création - entre les chaînes polymériques du polymère ou du mélange de polymères tel que décrit ci-dessus et sous l'action de l'humidité - de liaisons de type siloxane qui conduisent à la formation d'un réseau polymérique tridimensionnel. La composition adhésive ainsi réticulée est un adhésif sensible à la pression qui confère à la couche support qui en est revêtue le pouvoir adhésif et le tack désirés.

De préférence, l'enduction est réalisée uniformément sur la couche support ou sur la couche protectrice anti-adhérente mais l'enduction peut également être adaptée à la forme souhaitée de l'article auto-adhésif final.

Selon un mode de réalisation, l'enduction par la composition adhésive est réalisée sur au moins une partie des deux faces de la couche support. Si les deux faces de la couche support sont enduites, la composition adhésive peut être identique ou différente sur les deux faces, et le grammage peut être identique ou différent sur les deux faces.

Selon un mode de réalisation de l'invention, l'article auto-adhésif comprend une couche adhésive sur au moins une partie d'une face ou des deux faces de la couche support, ladite ou lesdites couches adhésives étant éventuellement revêtues d'une couche protectrice anti-adhérente. Selon un mode de réalisation, l'article auto-adhésif comprend deux couches protectrices anti-adhérentes sur chacune des deux couches adhésives. Dans ce cas, les deux couches protectrices peuvent être en matériaux identiques ou différents et/ou elles peuvent avoir une épaisseur identique ou différente.

L'article auto-adhésif selon l'invention peut être utilisé dans une méthode de collage comprenant les étapes suivantes :

a) retirer le film protecteur anti-adhérent, lorsqu'un tel film est présent ;
b) appliquer l'article sur une surface ; et
c) appliquer une pression sur ledit article.

Selon un mode de réalisation dans lequel l'article auto-adhésif est un article double face, la méthode de collage comprend en outre une étape dans laquelle soit une seconde surface est appliquée sur l'article collé sur la première surface soit l'article collé sur la première surface est appliqué sur une seconde surface.

**Mélange d'au moins deux polymères**

La présente invention concerne également un mélange d'au moins deux polymères, susceptible d'être incorporé dans la composition adhésive utilisée pour la fabrication de l'article auto-adhésif selon l'invention. Le mélange d'au moins deux polymères selon l'invention comprend au moins deux polymères appartenant à 2 groupes différents choisis parmi les groupes P1, P2, P3 et P4, étant entendu qu'au moins un des deux polymères du mélange répond à l'une des formules (Ibis), (IIbis), (IIIbis) ou (IVbis).

Comme indiqué ci-dessus pour l'article auto-adhésif, les polymères de formules (Ibis), (IIbis), (IIIbis) et (IVbis) selon l'invention présentent une quantité de fonctions silyle inférieure ou égale à 0,480 méq/g de polymère, de préférence inférieure ou égale à 0,450 méq/g de polymère.

De préférence, tous les polymères du mélange d'au moins deux polymères présentent une quantité de fonctions silyle inférieure ou égale à 0,480 méq/g de polymère, de préférence inférieure ou égale à 0,450 méq/g de polymère.

De préférence, le mélange de polymères selon l'invention présente une masse molaire moyenne allant de 600 à 100000 g/mole, de préférence encore de 1000 à 50000 g/mole, de préférence encore de 2000 à 20000 g/mole.

Les groupes sont définis de la manière suivante :

- ◦ Groupe P1 : polyuréthane ou polyéther présentant deux ou trois groupes terminaux de type trialkoxysilane ; exemples : polymère répondant à la formule (Ibis) ou (I),
- ◦ Groupe P2 : polyuréthane ou polyéther présentant deux ou trois groupes terminaux de type dialkoxysilane ; exemple : polymère répondant à la formule (IIbis) ou (II),
- ◦ Groupe P3 : polyuréthane ou polyéther présentant deux ou trois groupes terminaux de type monoalkoxysilane ; exemple : polymère répondant à la formule (IIIbis) ou (III),
- ◦ Groupe P4 : polyuréthane ou polyéther présentant un groupe terminal de type mono-, di- ou tri-alkoxysilane ; exemple : polymère répondant à la formule (IVbis) ou (IV).

Lorsqu'un polymère appartenant au groupe P1 est présent dans le mélange d'au moins deux polymères selon l'invention, ledit mélange comprend jusqu'à 99% en poids, par rapport au poids total dudit mélange, d'un ou plusieurs polymères du groupe P1.

Lorsqu'un polymère appartenant au groupe P2 est présent dans le mélange d'au moins deux polymères selon l'invention, ledit mélange comprend jusqu'à 99% en poids, par rapport au poids total dudit mélange, d'un ou plusieurs polymères du groupe P2.

Lorsqu'un polymère appartenant au groupe P3 est présent dans le mélange d'au moins deux polymères selon l'invention, ledit mélange comprend jusqu'à 15% en poids, par rapport au poids total dudit mélange, d'un ou plusieurs polymères du groupe P3.

Lorsqu'un polymère appartenant au groupe P4 est présent dans le mélange d'au moins deux polymères selon l'invention, ledit mélange comprend jusqu'à 15% en poids, par rapport au poids total dudit mélange, d'un ou plusieurs polymères du groupe P4.

De préférence, le mélange d'au moins deux polymères comprend essentiellement des polymères des groupes P1, P2, P3 et P4. De préférence, le mélange d'au moins deux polymères selon l'invention ne comprend pas de polymères autres que ceux appartenant aux groupes P1, P2, P3 et P4.

Selon un premier mode de réalisation de l'invention, le mélange d'au moins deux polymères comprend :

- jusqu'à 95% en poids, par rapport au poids total du mélange de polymères, d'au moins un polymère appartenant au groupe P1, et
- au moins un polymère appartenant au groupe P2.

Selon ce mode de réalisation, de préférence, le mélange d'au moins deux polymères comprend :

- de 10 à 95% en poids, de préférence de 20 à 90% en poids, de préférence encore de 25% à 85% en poids, avantageusement de 30 à 75% en poids, d'au moins un polymère appartenant au groupe P1, et
- de 5 à 90% en poids, de préférence de 10 à 80% en poids, de préférence encore de 15 à 75% en poids, avantageusement de 25 à 70% en poids, d'au moins un polymère appartenant au groupe P2,

par rapport au poids total du mélange d'au moins deux polymères.

Selon ce mode de réalisation de l'invention, de préférence le mélange d'au moins deux polymères consiste essentiellement en :

- jusqu'à 95% en poids, par rapport au poids total du mélange de polymères, d'au moins un polymère appartenant au groupe P1, et
- au moins un polymère appartenant au groupe P2.

Selon ce mode de réalisation, de préférence, le mélange d'au moins deux polymères consiste essentiellement en :

- de 10 à 95% en poids, de préférence de 20 à 90% en poids, de préférence encore de 25% à 85% en poids,

avantageusement de 30 à 75% en poids, d'au moins un polymère appartenant au groupe P1, et
- de 5 à 90% en poids, de préférence de 10 à 80% en poids, de préférence encore de 15 à 75% en poids, avantageusement de 25 à 70% en poids, d'au moins un polymère appartenant au groupe P2,

par rapport au poids total du mélange d'au moins deux polymères.

Selon un second mode de réalisation de l'invention, le mélange d'au moins deux polymères comprend :

- jusqu'à 95% en poids, par rapport au poids total du mélange de polymères, d'au moins un polymère appartenant au groupe P1, et
- jusqu'à 15% en poids, par rapport au poids total du mélange de polymères, d'au moins un polymère appartenant au groupe P3.

Selon ce mode de réalisation, de préférence, le mélange d'au moins deux polymères comprend :

- de 10 à 95% en poids, de préférence de 20 à 90% en poids, de préférence encore de 25% à 85% en poids, avantageusement de 30 à 75% en poids, d'au moins un polymère appartenant au groupe P1, et
- de 5 à 15% en poids, de préférence de 7 à 15% en poids, de préférence encore de 9 à 12% en poids, d'au moins un polymère appartenant au groupe P3,

par rapport au poids total du mélange d'au moins deux polymères.

Selon ce mode de réalisation de l'invention, de préférence le mélange d'au moins deux polymères consiste essentiellement en :

- jusqu'à 95% en poids, par rapport au poids total du mélange de polymères, d'au moins un polymère appartenant au groupe P1, et
- jusqu'à 15% en poids, par rapport au poids total du mélange de polymères, d'au moins un polymère appartenant au groupe P3.

Selon ce mode de réalisation, de préférence, le mélange d'au moins deux polymères consiste essentiellement en :

- de 10 à 95% en poids, de préférence de 20 à 90% en poids, de préférence encore de 25% à 85% en poids, avantageusement de 30 à 75% en poids, d'au moins un polymère appartenant au groupe P1, et
- de 5 à 15% en poids, de préférence de 7 à 15% en poids, de préférence encore de 9 à 12% en poids, d'au moins un polymère appartenant au groupe P3,

par rapport au poids total du mélange d'au moins deux polymères.

Selon un troisième mode de réalisation de l'invention, le mélange d'au moins deux polymères comprend :

- au moins un polymère appartenant au groupe P2, et
- jusqu'à 15% en poids, par rapport au poids total du mélange de polymères, d'au moins un polymère appartenant au groupe P3.

Selon ce mode de réalisation, de préférence, le mélange d'au moins deux polymères comprend :

- de 85 à 99% en poids, de préférence de 87 à 97% en poids, de préférence encore de 90% à 95% en poids, d'au moins un polymère appartenant au groupe P2, et
- de 1 à 15% en poids, de préférence de 3 à 13% en poids, de préférence encore de 5 à 10% en poids, d'au moins un polymère appartenant au groupe P3,

par rapport au poids total du mélange d'au moins deux polymères.

Selon ce mode de réalisation de l'invention, de préférence le mélange d'au moins deux polymères consiste essentiellement en :

- au moins un polymère appartenant au groupe P2, et
- jusqu'à 15% en poids, par rapport au poids total du mélange de polymères, d'au moins un polymère appartenant au groupe P3.

Selon ce mode de réalisation, de préférence, le mélange d'au moins deux polymères consiste essentiellement en :

- de 85 à 99% en poids, de préférence de 87 à 97% en poids, de préférence encore de 90% à 95% en poids, d'au moins un polymère appartenant au groupe P2, et
- de 1 à 15% en poids, de préférence de 3 à 13% en poids, de préférence encore de 5 à 10% en poids, d'au moins un polymère appartenant au groupe P3,

par rapport au poids total du mélange d'au moins deux polymères.

Selon un quatrième mode de réalisation de l'invention, le mélange d'au moins deux polymères comprend :

- jusqu'à 95% en poids, par rapport au poids total du mélange de polymères, d'au moins un polymère appartenant au groupe P1, et
- jusqu'à 15% en poids, par rapport au poids total du mélange de polymères, d'au moins un polymère appartenant au groupe P4.

Selon ce mode de réalisation, de préférence, le mélange d'au moins deux polymères comprend :

- de 10 à 95% en poids, de préférence de 20 à 90% en poids, de préférence encore de 25% à 85% en poids, avantageusement de 30 à 75% en poids, d'au moins un polymère appartenant au groupe P1, et
- de 5 à 15% en poids, de préférence de 7 à 15% en poids, de préférence encore de 9 à 12% en poids, d'au moins un polymère appartenant au groupe P4,

par rapport au poids total du mélange d'au moins deux polymères.

Selon ce mode de réalisation de l'invention, de préférence le mélange d'au moins deux polymères consiste essentiellement en :

- jusqu'à 95% en poids, par rapport au poids total du mélange de polymères, d'au moins un polymère appartenant au groupe P1, et
- jusqu'à 15% en poids, par rapport au poids total du mélange de polymères, d'au moins un polymère appartenant au groupe P4.

Selon ce mode de réalisation, de préférence, le mélange d'au moins deux polymères consiste essentiellement en :

- de 10 à 95% en poids, de préférence de 20 à 90% en poids, de préférence encore de 25% à 85% en poids, avantageusement de 30 à 75% en poids, d'au moins un polymère appartenant au groupe P1, et
- de 5 à 15% en poids, de préférence de 7 à 15% en poids, de préférence encore de 9 à 12% en poids, d'au moins un polymère appartenant au groupe P4,

par rapport au poids total du mélange d'au moins deux polymères.

Selon un cinquième mode de réalisation de l'invention, le mélange d'au moins deux polymères comprend :

- au moins un polymère appartenant au groupe P2, et
- jusqu'à 15% en poids, par rapport au poids total du mélange de polymères, d'au moins un polymère appartenant au groupe P4.

Selon ce mode de réalisation, de préférence, le mélange d'au moins deux polymères comprend :

- de 85 à 99% en poids, de préférence de 87 à 97% en poids, de préférence encore de 90% à 95% en poids, d'au moins un polymère appartenant au groupe P2, et
- de 1 à 15% en poids, de préférence de 3 à 13% en poids, de préférence encore de 5 à 10% en poids, d'au moins un polymère appartenant au groupe P4,

par rapport au poids total du mélange d'au moins deux polymères.

Selon ce mode de réalisation de l'invention, de préférence le mélange d'au moins deux polymères consiste essentiellement en :

- au moins un polymère appartenant au groupe P2, et
- jusqu'à 15% en poids, par rapport au poids total du mélange de polymères, d'au moins un polymère appartenant au groupe P4.

Selon ce mode de réalisation, de préférence, le mélange d'au moins deux polymères consiste essentiellement en :

- de 85 à 99% en poids, de préférence de 87 à 97% en poids, de préférence encore de 90% à 95% en poids, d'au moins un polymère appartenant au groupe P2, et
- de 1 à 15% en poids, de préférence de 3 à 13% en poids, de préférence encore de 5 à 10% en poids, d'au moins un polymère appartenant au groupe P4,

par rapport au poids total du mélange d'au moins deux polymères.

Selon un mode de réalisation de l'invention, le mélange d'au moins deux polymères comprend :

- jusqu'à 95% en poids, par rapport au poids total du mélange de polymères, d'au moins un polymère répondant à la formule (Ibis), et
- au moins un polymère répondant à la formule (IIbis).

Selon ce mode de réalisation, de préférence, le mélange d'au moins deux polymères comprend :

- de 10 à 95% en poids, de préférence de 20 à 90% en poids, de préférence encore de 25% à 85% en poids, avantageusement de 30 à 75% en poids, d'au moins un polymère répondant à la formule (Ibis), et
- de 5 à 90% en poids, de préférence de 10 à 80% en poids, de préférence encore de 15 à 75% en poids, avantageusement de 25 à 70% en poids, d'au moins un polymère répondant à la formule (IIbis),

par rapport au poids total du mélange d'au moins deux polymères.

Selon ce mode de réalisation de l'invention, de préférence le mélange d'au moins deux polymères consiste essentiellement en :

- jusqu'à 95% en poids, par rapport au poids total du mélange de polymères, d'au moins un polymère répondant à la formule (Ibis), et
- au moins un polymère répondant à la formule (IIbis).

Selon ce mode de réalisation de l'invention, de préférence, le mélange d'au moins deux polymères consiste essentiellement en :

- de 10 à 95% en poids, de préférence de 20 à 90% en poids, de préférence encore de 25% à 85% en poids, avantageusement de 30 à 75% en poids, d'au moins un polymère répondant à la formule (Ibis), et
- de 5 à 90% en poids, de préférence de 10 à 80% en poids, de préférence encore de 15 à 75% en poids, avantageusement de 25 à 70% en poids, d'au moins un polymère répondant à la formule (IIbis),

par rapport au poids total du mélange d'au moins deux polymères.

Selon un autre mode de réalisation de l'invention, le mélange d'au moins deux polymères comprend :

- jusqu'à 95% en poids, par rapport au poids total du mélange de polymères, d'au moins un polymère répondant à la formule (Ibis), et
- jusqu'à 15% en poids, par rapport au poids total du mélange de polymères, d'au moins un polymère répondant à la formule (IIIbis).

Selon ce mode de réalisation de l'invention, de préférence, le mélange d'au moins deux polymères comprend :

- de 10 à 95% en poids, de préférence de 20 à 90% en poids, de préférence encore de 25% à 85% en poids, avantageusement de 30 à 75% en poids, d'au moins un polymère répondant à la formule (Ibis), et
- de 5 à 15% en poids, de préférence de 7 à 15% en poids, de préférence encore de 9 à 12% en poids, d'au moins un polymère répondant à la formule (IIIbis),

par rapport au poids total du mélange d'au moins deux polymères.

Selon ce mode de réalisation de l'invention, de préférence le mélange d'au moins deux polymères consiste essentiellement en :

- jusqu'à 95% en poids, par rapport au poids total du mélange de polymères, d'au moins un polymère répondant à la formule (Ibis), et
- jusqu'à 15% en poids, par rapport au poids total du mélange de polymères, d'au moins un polymère répondant à la formule (IIIbis).

Selon ce mode de réalisation de l'invention, de préférence, le mélange d'au moins deux polymères consiste essentiellement en :

- de 10 à 95% en poids, de préférence de 20 à 90% en poids, de préférence encore de 25% à 85% en poids, avantageusement de 30 à 75% en poids, d'au moins un polymère répondant à la formule (Ibis), et
- de 5 à 15% en poids, de préférence de 7 à 15% en poids, de préférence encore de 9 à 12% en poids, d'au moins un polymère répondant à la formule (IIIbis),

par rapport au poids total du mélange d'au moins deux polymères.

Selon un autre mode de réalisation de l'invention, le mélange d'au moins deux polymères comprend :

- au moins un polymère répondant à la formule (IIbis), et
- jusqu'à 15% en poids, par rapport au poids total du mélange de polymères, d'au moins un polymère répondant à la formule (IIIbis).

Selon ce mode de réalisation de l'invention, de préférence, le mélange d'au moins deux polymères comprend :

- de 85 à 99% en poids, de préférence de 87 à 97% en poids, de préférence encore de 90% à 95% en poids, d'au moins un polymère répondant à la formule (IIbis), et
- de 1 à 15% en poids, de préférence de 3 à 13% en poids, de préférence encore de 5 à 10% en poids, d'au moins un polymère répondant à la formule (IIIbis),

par rapport au poids total du mélange d'au moins deux polymères.

Selon ce mode de réalisation de l'invention, de préférence le mélange d'au moins deux polymères consiste essentiellement en :

- au moins un polymère répondant à la formule (IIbis), et
- jusqu'à 15% en poids, par rapport au poids total du mélange de polymères, d'au moins un polymère répondant à la formule (IIIbis).

Selon ce mode de réalisation de l'invention, de préférence, le mélange d'au moins deux polymères consiste essentiellement en :

- de 85 à 99% en poids, de préférence de 87 à 97% en poids, de préférence encore de 90% à 95% en poids, d'au moins un polymère répondant à la formule (IIbis), et
- de 1 à 15% en poids, de préférence de 3 à 13% en poids, de préférence encore de 5 à 10% en poids, d'au moins un polymère répondant à la formule (IIIbis),

par rapport au poids total du mélange d'au moins deux polymères.

Selon un autre mode de réalisation de l'invention, le mélange d'au moins deux polymères comprend :

- jusqu'à 95% en poids, par rapport au poids total du mélange de polymères, d'au moins un polymère répondant à la formule (Ibis), et
- jusqu'à 15% en poids, par rapport au poids total du mélange de polymères, d'au moins un polymère répondant à la formule (IVbis).

Selon ce mode de réalisation de l'invention, de préférence, le mélange d'au moins deux polymères comprend :

- de 10 à 95% en poids, de préférence de 20 à 90% en poids, de préférence encore de 25% à 85% en poids, avantageusement de 30 à 75% en poids, d'au moins un polymère répondant à la formule (Ibis), et

- de 5 à 15% en poids, de préférence de 7 à 15% en poids, de préférence encore de 9 à 12% en poids, d'au moins un polymère répondant à la formule (IVbis),

par rapport au poids total du mélange d'au moins deux polymères.

Selon ce mode de réalisation de l'invention, de préférence le mélange d'au moins deux polymères consiste essentiellement en :

- jusqu'à 95% en poids, par rapport au poids total du mélange de polymères, d'au moins un polymère répondant à la formule (Ibis), et
- jusqu'à 15% en poids, par rapport au poids total du mélange de polymères, d'au moins un polymère répondant à la formule (IVbis).

Selon ce mode de réalisation de l'invention, de préférence, le mélange d'au moins deux polymères consiste essentiellement en :

- de 10 à 95% en poids, de préférence de 20 à 90% en poids, de préférence encore de 25% à 85% en poids, avantageusement de 30 à 75% en poids, d'au moins un polymère répondant à la formule (Ibis), et
- de 5 à 15% en poids, de préférence de 7 à 15% en poids, de préférence encore de 9 à 12% en poids, d'au moins un polymère répondant à la formule (IVbis),

par rapport au poids total du mélange d'au moins deux polymères.

Selon un autre mode de réalisation de l'invention, le mélange d'au moins deux polymères comprend :

- au moins un polymère répondant à la formule (IIbis), et
- jusqu'à 15% en poids, par rapport au poids total du mélange de polymères, d'au moins un polymère répondant à la formule (IVbis).

Selon ce mode de réalisation de l'invention, de préférence, le mélange d'au moins deux polymères comprend :

- de 85 à 99% en poids, de préférence de 87 à 97% en poids, de préférence encore de 90% à 95% en poids, d'au moins un polymère répondant à la formule (IIbis), et
- de 1 à 15% en poids, de préférence de 3 à 13% en poids, de préférence encore de 5 à 10% en poids, d'au moins un polymère répondant à la formule (IVbis),

par rapport au poids total du mélange d'au moins deux polymères.

Selon ce mode de réalisation de l'invention, de préférence le mélange d'au moins deux polymères consiste essentiellement en :

- au moins un polymère répondant à la formule (IIbis), et
- jusqu'à 15% en poids, par rapport au poids total du mélange de polymères, d'au moins un polymère répondant à la formule (IVbis).

Selon ce mode de réalisation de l'invention, de préférence, le mélange d'au moins deux polymères consiste essentiellement en :

- de 85 à 99% en poids, de préférence de 87 à 97% en poids, de préférence encore de 90% à 95% en poids, d'au moins un polymère répondant à la formule (IIbis), et
- de 1 à 15% en poids, de préférence de 3 à 13% en poids, de préférence encore de 5 à 10% en poids, d'au moins un polymère répondant à la formule (IVbis),

par rapport au poids total du mélange d'au moins deux polymères.

Selon un mode de réalisation, le mélange d'au moins deux polymères comprend essentiellement des polymères répondant aux formules (Ibis), (IIbis), (IIIbis) et (IVbis) décrits ci-dessus. De préférence, le mélange d'au moins deux polymères selon l'invention ne comprend pas de polymères autres que ceux répondant aux formules (Ibis), (IIbis), (IIIbis) et (IVbis) décrits ci-dessus.

Selon un autre mode de réalisation, le mélange d'au moins deux polymères comprend :

- au moins un polymère répondant à l'une des formules (Ibis), (IIbis), (IIIbis) et (IVbis), et

- au moins un autre polymère silylé appartenant à l'un des groupes P1, P2, P3 et P4,

étant entendu que l'autre polymère silylé n'appartient pas au même groupe que le polymère de formule (Ibis), (IIbis), (IIIbis) ou (IVbis).

Par « autre polymère silylé », on entend un polymère différent des polymères de formules (Ibis), (IIbis), (IIIbis) et (IVbis) et comprenant au moins une fonction silylée répondant à la formule générale : $-Si(R^5)_p(OR^4)_{3-p}$ où $R^5$, $R^4$ et p ont la même signification que ci-dessus.

De préférence, l'autre ou les autres polymères silylés sont choisis parmi :

- un polyuréthane ou un polyéther, appartenant au groupe P2, comprenant deux ou trois groupements terminaux de type dialkoxysilane hydrolysables et répondant à la formule (II) :

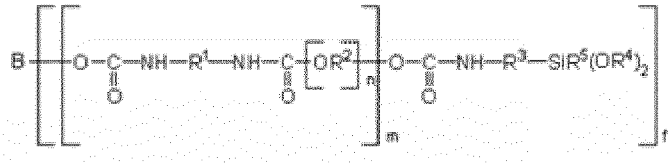

(II)

- un polyuréthane ou un polyéther, appartenant au groupe P1, comprenant deux ou trois groupements terminaux de type trialkoxysilane hydrolysables et répondant à la formule (I) :

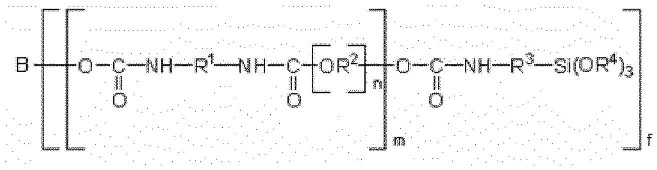

(I)

- un polyuréthane ou un polyéther, appartenant au groupe P3, comprenant deux ou trois groupements terminaux de type monoalkoxysilane hydrolysables et répondant à la formule (III) :

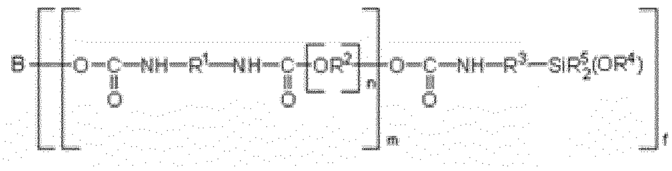

(III)

- un polyuréthane ou un polyéther, appartenant au groupe P4, comprenant un groupement terminal de type mono-, di- et/ou trialkoxysilane hydrolysable et répondant à la formule (IV) :

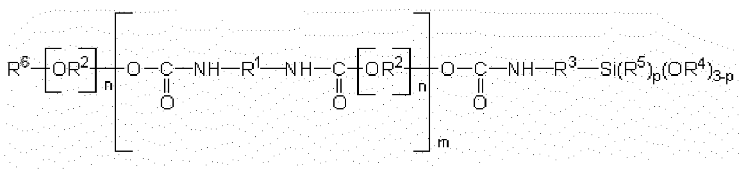

(IV)

seul ou en mélange.

Dans les formules (I), (II), (III), et (IV) ci-dessus,

- B représente l'une des deux formules ci-dessous :

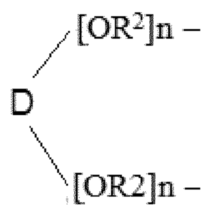

ou

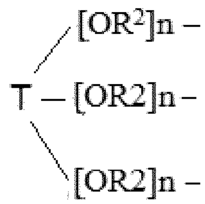

où D et T représentent un radical hydrocarboné comprenant de 2 à 66 atomes de carbone, linéaire, ramifié, cyclique, alicyclique ou aromatique, saturé ou insaturé, comprenant éventuellement un ou plusieurs hétéroatomes, tels que oxygène, soufre, azote ou halogène,

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone, et de préférence 3 atomes de carbone,
- $R^4$ et $R^5$, identiques ou différents, représentent chacun un radical alkyl linéaire ou ramifié comprenant de 1 à 4 atomes de carbone, $R^4$ pouvant éventuellement être engagé dans un cycle,
- $R^6$ représente un radical hydrocarboné comprenant de 1 à 22 atomes de carbone, linéaire, ramifié, cyclique, alicyclique ou aromatique, saturé ou insaturé, comprenant éventuellement un ou plusieurs hétéroatomes, tels que oxygène, soufre, azote ou halogène,
- n est un nombre entier tel que la masse molaire moyenne du bloc polyéther de formule $-[OR^2]_n-$ va de 300 g/mole à 40000 g/mole,
- m est un nombre entier tel que la masse molaire moyenne du polymère va de 600 g/mole à 100000 g/mole,
- p est un nombre entier égal à 0, 1 ou 2,
- f est un nombre entier égal à 2 ou 3.

Les polymères répondant à l'une des formules (I), (II), (III) et (IV) peuvent être obtenus selon un procédé décrit dans les demandes EP 2 336 208 et WO 2009/106699 avec éventuellement une substitution totale ou une substitution partielle des polyéthers diols par des polyéthers monols dans les polymères de formule (IV).

De préférence, le mélange d'au moins deux polymères selon l'invention comprend :

- de 5 à 95% en poids, de préférence de 10 à 90% en poids, d'au moins un polymère répondant à l'une des formules (Ibis), (IIbis), (IIIbis) et (IVbis) ; et
- de 5 à 95% en poids, de préférence de 10 à 90% en poids, d'au moins un autre polymère silylé, de préférence choisi parmi les polymères de formule (I), (II), (III) ou (IV),

par rapport au poids total du mélange d'au moins deux polymères,
étant entendu que le mélange comprend au moins deux polymères appartenant à 2 groupes différents choisis parmi les groupes P1, P2, P3 et P4.

## Composition adhésive

La présente invention concerne également une composition adhésive susceptible d'être utilisée pour la fabrication de l'article auto-adhésif selon l'invention.

La composition adhésive selon l'invention comprend :

a) le mélange d'au moins deux polymères selon l'invention,

b) au moins une résine tackifiante, et
c) au moins un catalyseur de réticulation.

Selon un mode de réalisation, la composition adhésive selon l'invention comprend :

a) de 20 à 85% en poids, de préférence de 40 à 65% en poids, du mélange d'au moins deux polymères selon l'invention,
b) de 15 à 80% en poids, de préférence de 25 à 70% en poids, de préférence encore de 35 à 60% en poids, de résine(s) tackifiante(s),
c) de 0,01 à 3% en poids de catalyseur(s) de réticulation,

par rapport au poids total de la composition adhésive.
Selon un mode de réalisation, la composition adhésive selon l'invention consiste essentiellement en :

a) de 20 à 85% en poids, de préférence de 40 à 65% en poids, du mélange d'au moins deux polymères selon l'invention,
b) de 15 à 80% en poids, de préférence de 25 à 70% en poids, de préférence encore de 35 à 60% en poids, de résine(s) tackifiante(s),
c) de 0,01 à 3% en poids de catalyseur(s) de réticulation,

par rapport au poids total de la composition adhésive.
De préférence, la résine tackifiante est telle que décrite précédemment pour l'article auto-adhésif selon l'invention.
De préférence, le catalyseur de réticulation est tel que décrit précédemment pour l'article auto-adhésif selon l'invention.
Selon un mode de réalisation, la composition adhésive selon l'invention comprend en outre un ou plusieurs additifs choisis parmi les agents dessicants, les plastifiants, les stabilisants (ou anti-oxydants). De préférence, ces additifs sont tels que décrits précédemment pour l'article auto-adhésif selon l'invention.
La composition adhésive selon l'invention peut être préparée par un procédé comprenant :

- une étape de mélange à l'abri de l'air, de préférence sous atmosphère inerte, du mélange d'au moins deux polymères avec la ou les résines tackifiantes, à une température comprise entre 30 et 170°C, de préférence entre 100 et 170°C, puis une étape de refroidissement dudit mélange à une température allant de 30 à 90°C, et avantageusement d'environ 70 °C, puis
- une étape d'incorporation dans le mélange obtenu à l'étape précédente du catalyseur de réticulation et, le cas échéant, de l'agent dessicant et des autres composants optionnels.

La composition adhésive selon l'invention n'est pas décrite dans l'art antérieur. La composition adhésive selon l'invention peut être utilisée avec un support différent de la couche support décrite ci-dessus pour l'article auto-adhésif selon l'invention.
La composition adhésive selon l'invention peut être utilisée pour la fabrication d'un article auto-adhésif, comprenant un support temporaire ou permanent et une couche adhésive, ladite couche adhésive étant obtenue par réticulation de la composition adhésive.
Le support de l'article auto-adhésif obtenu à partir de la composition adhésive selon l'invention peut être un support temporaire ou permanent.
Dans le cas où le support est un support temporaire, le support est de préférence un film protecteur anti-adhérent (« release liner » en anglais). Dans ce cas, une fois que l'article est collé sur une surface, l'article collé comprend uniquement une couche adhésive, le support temporaire étant destiné à être retiré.
Dans le cas où le support est un support permanent, le support peut être à base de tous matériaux utilisables pour la fabrication d'articles sensibles à la pression ou article PSA, tels que le polypropylène, le polyéthylène, le polyimide et le papier. Le support peut être en bandes fibreuses ou plastiques, en tissu, en fibre métallique ou en fibre de verre.
Selon un mode de réalisation, le support est à base de polyéthylène téréphtalate (PET), en polypropylène (PP) ou en polyuréthane (PU).
Selon un mode de réalisation de l'invention, le support est sous la forme d'une grille ou d'une maille ou d'un matériau non-tissé. Dans ce cas, la couche adhésive peut être présente sur une seule face du support, mais peut également pénétrer à l'intérieur du support pendant l'application de la composition adhésive grâce à la nature poreuse du support, de telle sorte que les fibres du support sont entièrement revêtues de la composition adhésive. Dans ce cas, un film protecteur anti-adhérent est de préférence présent sur la couche adhésive ou composition adhésive.

Selon un mode de réalisation, l'article auto-adhésif obtenu à partir de la composition adhésive selon l'invention comprend un support permanent revêtu d'une couche adhésive. De préférence, la couche adhésive est en outre revêtue d'un film protecteur anti-adhérent, de préférence un film siliconé.

A titre d'alternative au film protecteur anti-adhérent, la face arrière du support permanent qui n'est pas revêtue de la couche adhésive, peut avoir une surface anti-adhérente, par exemple une couche protectrice siliconée.

Les deux modes de réalisation décrits ci-dessus permettent d'enrouler l'article auto-adhésif puis de le dérouler sans problème de transfert de colle entre la couche adhésive et le support permanent.

Selon un mode de réalisation, le support permanent est revêtu sur ses deux faces par une composition adhésive, qui peut être identique ou différente, au moins une des deux compositions adhésives étant selon l'invention.

Des supports peuvent être préparés à partir des matériaux suivants :

- matériaux polyuréthane Estane™ 58309NAT022 (B.F. Goodrich, Cleveland, Ohio),
- polyuréthane Rucothane™ ou polyester élastomère HytreFM 4056 (DuPont, Wilmington, Del.),
- polyether block amide Pebax™ 2533 ou 3533 (Arkema, Paris, France).

L'article auto-adhésif obtenu à partir de la composition adhésive selon l'invention peut être fabriqué selon un procédé tel que décrit précédemment pour l'article auto-adhésif selon l'invention.

L'article auto-adhésif peut être utilisé dans une méthode de collage comprenant les étapes suivantes :

a) retirer le film protecteur anti-adhérent, lorsqu'un tel film est présent ;
b) appliquer l'article sur une surface ; et
c) appliquer une pression sur ledit article.

Selon un mode de réalisation dans lequel l'article auto-adhésif est un article double face, la méthode de collage comprend en outre une étape d'application de l'article collé sur la première surface sur une seconde surface.

## EXEMPLES

Différentes compositions adhésives ont été testées sur deux types différents de couche support : un support PET et un support en mousse selon l'invention.

Les polymères suivants ont été utilisés :

- GENIOSIL® STP-E 15 (disponible auprès de Wacker) : polyéther du groupe P1 répondant à la formule (I) présentant deux groupes terminaux de type triméthoxysilane, une masse molaire moyenne d'environ 10000 g/mol, une polydispersité d'environ 1,6 et une quantité de fonctions silyle de 0,200 milliéquivalent par gramme de polymère ;
- GENIOSIL® STP-E 30 (disponible auprès de Wacker) : polyéther du groupe P2 répondant à la formule (II) présentant deux groupes terminaux de type diméthoxysilane, une masse molaire moyenne d'environ 14493 g/mol, une polydispersité d'environ 1,6 et une quantité de fonctions silyle de 0,138 milliéquivalent par gramme de polymère ;
- Polyuréthane A tel que décrit dans la demande internationale WO 2009/106699 : polyuréthane du groupe P1 répondant à la formule (I) présentant deux groupes terminaux de type triméthoxysilane, une masse molaire moyenne d'environ 16393 g/mol, une polydispersité d'environ 1,7 et une quantité de fonctions silyle de 0,122 milliéquivalent par gramme de polymère ;
- SPUR+® 1050MM (disponible auprès de Momentive) : polyuréthane du groupe P1 répondant à la formule (I) présentant deux groupes terminaux de type triméthoxysilane, une masse molaire moyenne d'environ 16393 g/mol, une polydispersité d'environ 1,7 et une quantité de fonctions silyle de 0,122 milliéquivalent par gramme de polymère;
- MS Polymer® SAT 145 (disponible auprès de Kaneka) : polymère présentant un groupe terminal de type diméthoxysilane, une masse molaire moyenne d'environ 3497 g/mol, une polydispersité d'environ 2,1 et une quantité de fonctions silyle de 0,286 milliéquivalent par gramme de polymère ;
- Polymère Ex8 : polyéther du groupe P2 répondant à la formule (IIbis) présentant deux groupes terminaux de type diéthoxysilane, une masse molaire moyenne d'environ 5376 g/mol et une quantité de fonctions silyle de 0,372 méq/g ;
- Polymère Ex15 : polyéther du groupe P3 répondant à la formule (IIIbis) présentant 2 groupes terminaux de type monoéthoxysilane, une masse molaire moyenne d'environ 5263 g/mol et une quantité de fonctions silyle de 0,380 méq/g ;
- Polymère Ex6-18 : polyéther du groupe P2 répondant à la formule (IIbis) présentant 3 groupes terminaux de type diéthoxysilane, une masse molaire moyenne d'environ 7160 g/mol et une quantité de fonctions silyle de 0,419 méq/g ;
- Polymère Ex19 : polyéther du groupe P1 répondant à la formule (Ibis) présentant 3 groupes terminaux de type triméthoxysilane, une masse molaire moyenne d'environ 6818 g/mol et une quantité de fonctions silyle de 0,440 méq/g ;

- Polymère Ex20 : polyéther du groupe P1 répondant à la formule (Ibis) présentant 2 groupes terminaux de type triméthoxysilane, une masse molaire moyenne d'environ 5376 g/mol et une quantité de fonctions silyle de 0,372 méq/g ;
- Polymère ExC6 : polyéther du groupe P1 présentant 2 groupes terminaux de type triméthoxysilane, une masse molaire moyenne d'environ 4000 g/mol et une quantité de fonctions silyle de 0,500 méq/g.

Le polymère Ex8 est préparé selon le mode opératoire suivant :

- Introduire 84,1 g de polyol ACCLAIM® 8200 (disponible auprès de Bayer) dans un appareil de synthèse en verre, sous atmosphère d'azote et sous vide, chauffé à environ 85-90°C ; puis
- Introduire 0,1 g de catalyseur BORCHI KAT® VP 0244 (néodécanoate de bismuth et de zinc disponible auprès de la Société Borchers) ; puis
- Maintenir l'appareil pendant environ 1 heure sous vide à 85-90°C ; puis
- Introduire 6,4 g d'isophorone diisocyanate ;
- Maintenir à 85-90°C sous azote pendant environ 2 heures jusqu'à l'obtention d'un taux de fonctions NCO entre 1,5 et 1,9% (taux mesuré par dosage sur prélèvement) ; ensuite
- Refroidir l'appareil à 65-70°C ; puis
- Introduire 9,01 g de GENIOSIL® XL924 (N-cyclohexylaminométhyl-méthyldiéthoxysilane disponible auprès de Wacker) ;
- Maintenir à 70°C sous atmosphère d'azote pendant environ 1 heure jusqu'à la disparition totale des fonctions NCO.

Le polymère Ex15 est préparé selon le mode opératoire suivant :

- Introduire 87,3 g de polyol ACCLAIM® 8200 (disponible auprès de Bayer) dans un appareil de synthèse en verre, sous atmosphère d'azote et sous vide, chauffé à environ 85-90°C ; puis
- Introduire 0,1 g de catalyseur BORCHI KAT® VP 0244 (néodécanoate de bismuth et de zinc disponible auprès de la Société Borchers) ; puis
- Maintenir l'appareil pendant environ 1 heure sous vide à 85-90°C ; puis
- Introduire 6,6 g d'isophorone diisocyanate ;
- Maintenir à 85-90°C sous azote pendant environ 2 heures jusqu'à l'obtention d'un taux de fonctions NCO entre 1,5 et 1,9% (taux mesuré par dosage sur prélèvement) ; ensuite
- Refroidir l'appareil à 65-70°C ; puis
- Introduire 6,14 g de 3-aminopropyldiméthyle-éthoxysilane ; puis
- Maintenir à 70°C sous azote pendant environ 1 heure jusqu'à la disparition totale des fonctions NCO.

Le polymère Ex19 est préparé selon le mode opératoire suivant :

- Introduire 82,18 g de polyol ACCLAIM® 6300 (disponible auprès de Bayer) dans un appareil de synthèse en verre, sous atmosphère d'azote et sous vide, chauffé à environ 85-90°C ; puis
- Introduire 0,04 g de catalyseur BORCHI KAT® VP 0244 (néodécanoate de bismuth et de zinc disponible auprès de la société Borchers) ; puis
- Maintenir l'appareil pendant environ 1 heure sous vide à 85-90°C ; puis
- Introduire 9,44 g d'isophorone diisocyanate ;
- Maintenir à 85-90°C sous azote pendant environ 2 heures jusqu'à l'obtention d'un taux de fonctions NCO entre 1,8 et 2,2% (taux mesuré par dosage sur prélèvement) ; ensuite
- Refroidir l'appareil à 65-70°C ; puis
- Introduire 7,84 g de Silane® A1110 (gamma-aminopropyltriméthoxysilane disponible auprès de la Société Momentive) ; puis
- Maintenir à 70°C sous azote pendant environ 1 heure jusqu'à la disparition totale des fonctions NCO.

Le polymère Ex6-18 est préparé selon le mode opératoire suivant :

- Introduire 82,03 g de polyol ACCLAIM® 6300 (disponible auprès de Bayer) dans un appareil de synthèse en verre, sous atmosphère d'azote et sous vide, chauffé à environ 85-90°C ; puis
- Introduire 0,04 g de catalyseur BORCHI KAT® VP 0244 (néodécanoate de bismuth et de zinc disponible auprès de la société Borchers) ; puis
- Maintenir l'appareil pendant environ 1 heure sous vide à 85-90°C ; puis
- Introduire 9,45 g d'isophorone diisocyanate ;

- Maintenir à 85-90°C sous azote pendant environ 2 heures jusqu'à l'obtention d'un taux de fonctions NCO entre 1,8 et 2,2% (taux mesuré par dosage sur prélèvement) ; ensuite
- Refroidir l'appareil à 65-70°C ; puis
- Introduire 7,98 g de 3-aminopropylméthyle-diéthoxysilane ; puis
- Maintenir à 70°C sous azote pendant environ 1 heure jusqu'à la disparition totale des fonctions NCO.

Le polymère Ex20 est préparé selon le mode opératoire suivant :

- Introduire 84,71 g de polyol ACCLAIM® 8200 (disponible auprès de Bayer) dans un appareil de synthèse en verre, sous atmosphère d'azote et sous vide, chauffé à environ 85-90°C ; puis
- Introduire 0,04 g de catalyseur BORCHI KAT® VP 0244 ; puis
- Maintenir l'appareil pendant environ 1 heure sous vide à 85-90°C ; puis
- Introduire 6,5g d'isophorone diisocyanate ;
- Maintenir à 85-90°C sous azote pendant environ 2 heures jusqu'à l'obtention d'un taux de fonctions NCO entre 1,7 et 2,2% (taux mesuré par dosage sur prélèvement) ; ensuite
- Refroidir l'appareil à 65-70°C ; puis
- Introduire 8,23g de N éthyl-3-triméthoxysilyl-2-méthylpropanamine puis,
- Maintenir à 70°C sous azote pendant environ 1 heure jusqu'à la disparition totale des fonctions NCO.

Le polymère ExC6 est préparé selon le mode opératoire suivant :

- Introduire 80,3g de polyol ACCLAIM® 8200 (disponible auprès de Bayer) dans un appareil de synthèse en verre, sous atmosphère d'azote et sous vide, chauffé à environ 85-90°C ; puis
- Introduire 0,07g de catalyseur BORCHI KAT® VP 0244 ; puis
- Maintenir l'appareil pendant environ 1 heure sous vide à 85-90°C ; puis
- Introduire 8,1g d'isophorone diisocyanate ;
- Maintenir à 85-90°C sous azote pendant environ 2 heures jusqu'à l'obtention d'un taux de fonctions NCO entre 1,7 et 2,2% (taux mesuré par dosage sur prélèvement) ; ensuite
- Refroidir l'appareil à 65-70°C ; puis
- Introduire 11,2g de N éthyl-3-triméthoxysilyl-2-méthylpropanamine puis,
- Maintenir à 70°C sous azote pendant environ 1 heure jusqu'à la disparition totale des fonctions NCO.

Les produits suivants ont également été utilisés :

- DERTOPHENE® H 150: résine tackifiante de type terpène phénolique ;
- IRGANOX® 1010 et IRGANOX® 245 : agents stabilisants ;
- K-KAT® 5218 : catalyseur de réticulation ;
- Vinylglycoxysilane : agent capable d'absorber de l'eau (« waterscavenger » en anglais).

Les tableaux 1 et Ibis indiquent les composants des compositions adhésives qui ont été testées. Les quantités de chaque composant sont indiquées en pourcentage massique.

Les compositions adhésives C1, C2, C3, C4, C5 et C6 correspondent à des compositions adhésives comparatives.

Les compositions 6, 8, 15, 18, 19 et 20 correspondent à des compositions adhésives selon l'invention.

Tableau 1 : compositions adhésives (% massiques)

| | C1 | C2 | C3 | C4 | C5 | C6 |
|---|---|---|---|---|---|---|
| GENIOSIL® STPE15 | | | 51,10 | | 38,90 | |
| GENIOSIL® STPE30 | | | | | 12,90 | |
| Polyurétane A de WO2009/106699 | 51,70 | | | 41,00 | | |
| SPUR+® 1050MM | | 51,70 | | | | |
| MS Polymer® SAT 145 | | | | 10,10 | | |
| Polymère Ex8 | | | | | | |
| Polymère Ex15 | | | | | | |

(suite)

| | C1 | C2 | C3 | C4 | C5 | C6 |
|---|---|---|---|---|---|---|
| Polymère Ex6-18 | | | | | | |
| Polymère Ex19 | | | | | | |
| Polymère ExC6 | | | | | | 51,70 |
| DERTOPHENE® H150 | 46,70 | 46,70 | 46,18 | 46,20 | 46,70 | 46,10 |
| IRGANOX® 1010 | 0,47 | 0,47 | 0,47 | 0,45 | 0,45 | 0,45 |
| IRGANOX® 245 | 0,25 | 0,25 | 0,25 | 0,25 | 0,25 | 0,25 |
| K-KAT® 5218 | 0,50 | 0,50 | 2,00 | 2,00 | 1,00 | 2,00 |
| Vinylglycoxysilane | 0,38 | 0,38 | | | | |
| | 6 | 8 | 15 | 18 | 19 | 20 |
| GENIOSIL® STPE15 | | | | | | |
| GENIOSIL® STPE30 | | | | 38,90 | 38,90 | |
| Polyurétane A de WO2009/106699 | | | 45,90 | | | |
| SPUR+® 1050MM | | | | | | |
| MS Polymer® SAT 145 | | | | | | |
| Polymère Ex8 | | 51,70 | | | | |
| Polymère Ex15 | | | 5,80 | | | |
| Polymère Ex6-18 | 51,70 | | | 12,90 | | |
| Polymère Ex19 | | | | | 12,90 | |
| Polymère Ex20 | | | | | | 51,70 |
| DERTOPHENE® H150 | 46,70 | 46,70 | 46,70 | 46,70 | 46,70 | 46,10 |
| IRGANOX® 1010 | 0,45 | 0,47 | 0,45 | 0,45 | 0,45 | 0,45 |
| IRGANOX® 245 | 0,25 | 0,25 | 0,25 | 0,25 | 0,25 | 0,25 |
| K-KAT® 5218 | 1,00 | 0,50 | 1,00 | 1,00 | 1,00 | 2,00 |
| Vinylglycoxysilane | | 0,38 | | | | |

Les propriétés de l'article auto-adhésif selon l'invention (avec une couche support sous la forme d'une mousse) ont été évaluées et comparées avec les propriétés d'un article auto-adhésif comparatif (avec une couche support en PET).

La couche support sous la forme d'une mousse qui a été utilisée pour les essais est une mousse TL SRZ® 1200.8 disponible auprès d'Alveo présentant les caractéristiques suivantes :

- Une élongation en longueur à la rupture à 23°C de 408,3 $\pm$ 53 %,
- Une élongation en largeur à la rupture à 23°C de 390,3%,
- Une densité apparente d'environ 96,92 kg/$m^3$,
- Une épaisseur d'environ 0,67 mm,
- Un module d'Young de 11,2 $\pm$ 0,5 MPa.

La couche support en PET qui a été utilisée pour les essais présente une épaisseur de 50 $\mu$m.

Les compositions indiquées dans le tableau 1 ont été appliquées sur les deux couches support décrites ci-dessus avec un grammage d'environ 50 g/$m^2$ afin d'obtenir un article auto-adhésif.

Procédé d'obtention des articles auto-adhésifs testés : Chaque composition adhésive est préchauffée à une température d'environ 100°C et introduite dans une cartouche de laquelle un bourrelet est extrudé puis déposé à proximité du bord de la couche support parallèlement à sa largeur. La composition adhésive contenue dans ce bourrelet est ensuite étalée sur la surface entière d'un support siliconé (film protecteur anti-adhérent), de façon à obtenir une couche uniforme d'épaisseur substantiellement constante, à l'aide d'un applicateur (« coater » en anglais) à buse à lèvres qui

est déplacé d'un côté de la couche support au côté opposé. Une couche de composition est ainsi déposée et correspond à un grammage d'environ 50 g/$m^2$ (épaisseur d'environ 50 $\mu$m). La couche support ainsi revêtue de la composition adhésive est ensuite placée dans un four à une température d'environ 120°C alimenté en vapeur d'eau de telle sorte que la quantité d'eau est d'environ 50 g/$m^3$ avec une répartition homogène. Le temps de passage dans le four est d'environ 5 minutes, permettant la réticulation de la composition adhésive pour obtenir une couche adhésive. Enfin, une fois sortie du four, la couche adhésive réticulée est ensuite laminée sur la couche support désirée (mousse Alveo® TLSRZ® 1200.8 ou support PET 50 $\mu$m).

Temps de résistance du joint de colle au cisaillement statique :

Le maintien à température élevée du pouvoir adhésif de la couche support revêtue de la composition réticulée est évalué au plus tard dans les 5 heures de son obtention par un test qui détermine le temps de résistance du joint de colle au cisaillement statique à 90°C sur PET et à 70°C sur mousse. Il est fait référence pour ce test à la méthode FINAT n°8. Le principe est le suivant.

Une éprouvette sous forme de bande rectangulaire (25 mm x 75 mm) est découpée dans la couche support PET ou dans la couche support en mousse revêtue de la composition réticulée préparée précédemment, au maximum 5 heures après sa préparation. Après enlèvement de la totalité de la couche anti-adhérente protectrice, une portion carrée de 25 mm de côté située à l'extrémité de la bande adhésive est fixée sur une plaque de verre.

La plaque d'essai ainsi obtenue est introduite, au moyen d'un support approprié, en position sensiblement verticale dans une étuve à 90°C pour l'article en PET et 70°C pour l'article en mousse, la partie non collée de la bande de longueur 50 mm se situant en dessous de la plaque. Après équilibrage thermique, la partie restée libre de la bande est reliée à une masse de 1 kg, l'ensemble du dispositif restant toujours durant la durée du test maintenu dans l'étuve à 90°C et 70°C respectivement pour le support en PET et le support en mousse.

Sous l'effet de cette masse, le joint de colle qui assure la fixation de la bande sur la plaque est soumis à une contrainte de cisaillement. Pour mieux contrôler cette contrainte, la plaque d'essai est en fait placée de sorte à faire un angle de 2° par rapport à la verticale.

On note le temps au bout duquel la bande se décroche de la plaque à la suite de la rupture du joint de colle sous l'effet de cette contrainte.

Ce temps est indiqué dans les tableaux 2 et 2bis.

Tableau 2 : propriétés des articles auto-adhésifs

| | C1 | C2 | C3 | C4 | C5 | C6 |
|---|---|---|---|---|---|---|
| Couche support en PET | | | | | | |
| Résistance au cisaillement à 90°C | > 24h | > 24h | > 24h | > 24h | > 24h | > 24h |
| Couche support sous la forme d'une mousse Alveo TL SRZ® 1200.8 | | | | | | |
| Résistance au cisaillement à 70°C | 0,1h | 0,2h | 0,1h | 1h | 5h | 1h |
| | 6 | 8 | 15 | 18 | 19 | 20 |
| Couche support en PET | | | | | | |
| Résistance au cisaillement à 90°C | > 24h | > 24h | > 24h | > 24h | > 24h | > 24h |
| Couche support sous la forme d'une mousse Alveo TL SRZ® 1200.8 | | | | | | |
| Résistance au cisaillement à 70°C | > 24h | > 24h | 12h | > 24h | > 24h | > 24h |

Les exemples comparatifs C1, C2, C3, C4, C5 et C6 montrent que des articles auto-adhésifs comprenant une composition adhésive identique n'ont pas les mêmes propriétés selon la couche support utilisée. En effet, ces exemples donnent de bons résultats par rapport à la résistance au cisaillement avec un support PET (résistance supérieure à 24h), mais ces exemples comparatifs ne donnent pas de résultats satisfaisants de résistance au cisaillement avec un support sous la forme d'une mousse (résistance comprise de 0,1h, 0,2h, 1h ou 5h).

Ces essais illustrent que toutes les compositions adhésives de l'art antérieur qui présentent des propriétés satisfaisantes sur support PET ne présentent pas des propriétés satisfaisantes sur support conformable de type mousse, tel que revendiqué.

Au contraire, l'exemple 8 selon l'invention, dans lesquels la composition adhésive comprend un seul polymère répondant à la formule (IIbis), donnent de bons résultats avec un support sous la forme d'une mousse.

De même, l'exemple 18 dans lequel la composition adhésive comprend un polymère de formule (IIbis) et un

polymère de formule (II) donne de bons résultats avec un support sous la forme d'une mousse.

L'exemple 20 comprend un polymère de formule (Ibis) présentant une quantité de fonctions silyle de 0,372 méq/g dans la gamme revendiquée et présente de bons résultats avec un support sous la forme d'une mousse.

Au contraire, l'exemple comparatif C6 comprend un polymère de formule (Ibis) présentant une quantité de fonctions silyle de 0,500 méq/g, teneur en dehors de la gamme revendiquée. Cet exemple C6 ne donne pas de résultats satisfaisants de résistance au cisaillement avec un support sous la forme d'une mousse.

Les exemples 15 et 19, dans lesquels la composition comprend le mélange de deux polymères appartenant à deux groupes différents parmi P1, P2, P3 et P4, donnent des résultats satisfaisants en termes de résistance au cisaillement.

## Revendications

1. Article auto-adhésif comprenant une couche support revêtue d'une couche adhésive, ladite couche support étant sous la forme d'une mousse et présentant une élongation à la rupture allant de 50 à 1200% mesurée selon la norme ISO 1926 à 23°C et une densité apparente allant de 25 à 1200 kg/$m^3$ mesurée selon la norme ISO 845, ladite couche adhésive est obtenue par réticulation d'une composition adhésive comprenant :

    a) au moins un polymère de formule (Ibis) ou au moins un polymère de formule (IIbis) ou un mélange d'au moins deux polymères choisis parmi les polyuréthanes et les polyéthers présentant un, deux ou trois groupements terminaux de type mono-, di- ou tri-alkoxysilane, ledit mélange comprenant au moins un polymère répondant à l'une des formules (Ibis), (IIbis), (IIIbis) et (IVbis),
    étant entendu que:

    - lorsqu'un polymère présentant deux ou trois groupements terminaux de type monoalkoxysilane est présent, ledit mélange comprend jusqu'à 15% en poids, par rapport au poids total du mélange, dudit polymère,
    - lorsqu'un polymère présentant un groupement terminal de type mono-, di- ou tri-alkoxysilane est présent, ledit mélange comprend jusqu'à 15% en poids, par rapport au poids total du mélange, dudit polymère,

    b) au moins une résine tackifiante, et
    c) au moins un catalyseur de réticulation ;

    où
    le polymère de formule (Ibis) est un polyuréthane ou un polyéther comprenant deux ou trois groupements terminaux de type trialkoxysilane hydrolysables, présentant une quantité de fonctions silyle inférieure ou égale à 0,480 méq/g de polymère et répondant à la formule suivante :

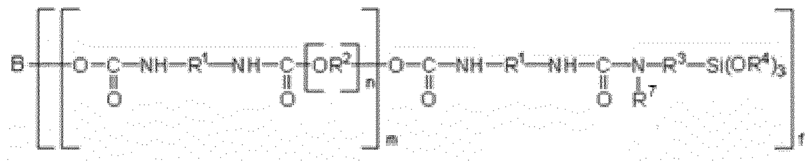
(Ibis)

    le polymère de formule (IIbis) est un polyuréthane ou un polyéther comprenant deux ou trois groupements terminaux de type dialkoxysilane hydrolysables, présentant une quantité de fonctions silyle inférieure ou égale à 0,480 méq/g de polymère et répondant à la formule suivante :

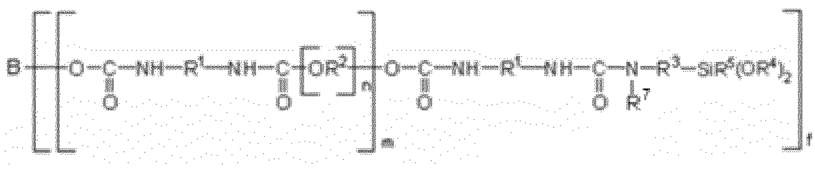
(IIbis)

    le polymère de formule (IIIbis) est un polyuréthane ou un polyéther comprenant deux ou trois groupements terminaux de type monoalkoxysilane hydrolysables, présentant une quantité de fonctions silyle inférieure ou égale à 0,480 méq/g de polymère et répondant à la formule suivante :

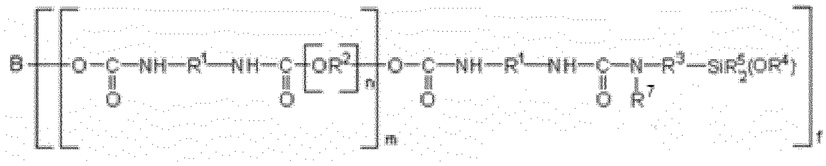

(IIIbis)

le polymère de formule (IVbis) est un polyuréthane ou un polyéther comprenant un groupement terminal de type mono-, di- et/ou trialkoxysilane hydrolysable, présentant une quantité de fonctions silyle inférieure ou égale à 0,480 méq/g de polymère et répondant à la formule suivante :

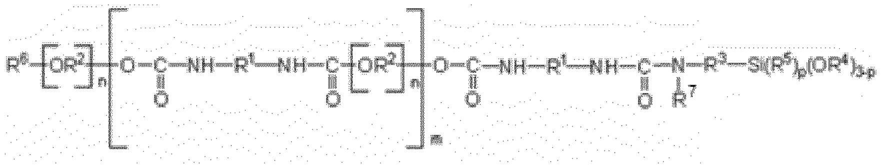

(IVbis)

dans les formules (Ibis), (IIbis), (IIIbis) et (IVbis) ci-dessus,

- B représente l'une des deux formules ci-dessous :

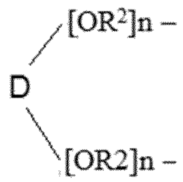

ou

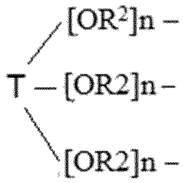

où D et T représentent un radical hydrocarboné comprenant de 2 à 66 atomes de carbone, linéaire, ramifié, cyclique, alicyclique ou aromatique, saturé ou insaturé, comprenant éventuellement un ou plusieurs hétéroatomes,
- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone,
- $R^4$ et $R^5$, identiques ou différents, représentent chacun un radical alkyl linéaire ou ramifié comprenant de 1 à 4 atomes de carbone, $R^4$ pouvant éventuellement être engagé dans un cycle,
- $R^6$ représente un radical hydrocarboné comprenant de 1 à 22 atomes de carbone, linéaire, ramifié, cyclique, alicyclique ou aromatique, saturé ou insaturé, comprenant éventuellement un ou plusieurs hétéroatomes,
- $R^7$ représente un atome d'hydrogène, un radical phényle ou un radical alkyle linéaire, ramifié ou cyclique comprenant de 1 à 10 atomes de carbone,
- n est un nombre entier tel que la masse molaire moyenne du bloc polyéther de formule $-[OR^2]_n-$ va de 300 g/mole à 40000 g/mole,
- m est un nombre entier tel que la masse molaire moyenne du polymère va de 600 g/mole à 100000 g/mole,
- p est un nombre entier égal à 0, 1 ou 2,
- f est un nombre entier égal à 2 ou 3.

**2.** Article auto-adhésif selon la revendication 1, dans lequel le mélange d'au moins deux polymères comprend :

- au moins un polymère répondant à l'une des formules (Ibis), (IIbis), (IIIbis) ou (IVbis) décrites dans la revendication 1, et
- au moins un polymère répondant à l'une des formules (I), (II), (III) ou (IV) ci-dessous :

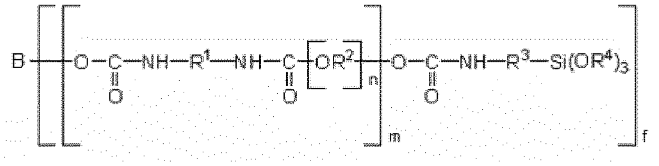

(I)

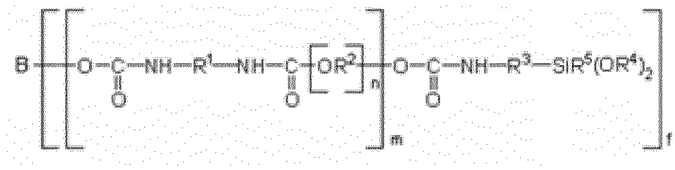

(II)

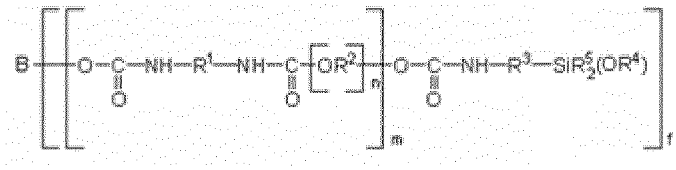

(III)

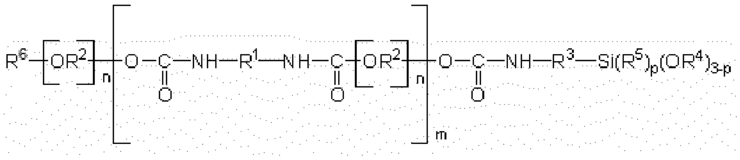

(IV)

étant entendu que :
- lorsqu'un polymère de formule (IIIbis) et/ou (III) est présent, ledit mélange comprend jusqu'à 15% en poids de polymère de formule (IIIbis) et/ou (III), par rapport au poids total du mélange de polymères,
- lorsqu'un polymère de formule (IVbis) et/ou (IV) est présent, ledit mélange comprend jusqu'à 15% en poids de polymère de formule (IVbis) et/ou (IV), par rapport au poids total du mélange de polymères ;

dans les formules (I), (II), (III), et (IV) ci-dessus,

- B représente l'une des deux formules ci-dessous :

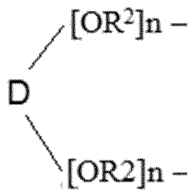

ou

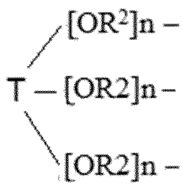

où D et T représentent un radical hydrocarboné comprenant de 2 à 66 atomes de carbone, linéaire, ramifié, cyclique, alicyclique ou aromatique, saturé ou insaturé, comprenant éventuellement un ou plusieurs hétéroatomes,

- $R^1$ représente un radical divalent hydrocarboné comprenant de 5 à 15 atomes de carbone qui peut être aromatique ou aliphatique, linéaire, ramifié ou cyclique,
- $R^3$ représente un radical divalent alkylène linéaire ou ramifié comprenant de 1 à 6 atomes de carbone,
- $R^2$ représente un radical divalent alkylène linéaire ou ramifié comprenant de 2 à 4 atomes de carbone,
- $R^4$ et $R^5$, identiques ou différents, représentent chacun un radical alkyl linéaire ou ramifié comprenant de 1 à 4 atomes de carbone, $R^4$ pouvant éventuellement être engagé dans un cycle,
- $R^6$ représente un radical hydrocarboné comprenant de 1 à 22 atomes de carbone, linéaire, ramifié, cyclique, alicyclique ou aromatique, saturé ou insaturé, comprenant éventuellement un ou plusieurs hétéroatomes,
- n est un nombre entier tel que la masse molaire moyenne du bloc polyéther de formule $-[OR^2]_n-$ va de 300 g/mole à 40000 g/mole,
- m est un nombre entier tel que la masse molaire moyenne du polymère va de 600 g/mole à 100000 g/mole,
- p est un nombre entier égal à 0, 1 ou 2,
- f est un nombre entier égal à 2 ou 3.

**3.** Article auto-adhésif selon la revendication 1 ou la revendication 2, dans lequel la couche support présente un module d'Young inférieur ou égal à 300 MPa.

**4.** Article auto-adhésif selon l'une quelconque des revendications 1 à 3, dans lequel la couche support se présente sous la forme d'une ou plusieurs couches polymériques.

**5.** Article auto-adhésif selon l'une quelconque des revendications 1 à 4, dans lequel la composition adhésive comprend :

- de 20 à 85% en poids, par rapport au poids total de la composition adhésive, d'au moins un polymère ou un mélange de polymères tel que défini dans la revendication 1 ou 2,
- de 15 à 80% en poids, par rapport au poids total de la composition adhésive, d'au moins une résine tackifiante,
- de 0,01 à 3% en poids, par rapport au poids total de la composition adhésive, d'au moins un catalyseur de réticulation.

**6.** Article auto-adhésif selon l'une quelconque des revendications 1 à 5, dans lequel la résine tackifiante présente une masse molaire moyenne en nombre allant de 100 Da à 5 kDa et est choisie parmi :

(i) les résines susceptibles d'être obtenues par polymérisation d'hydrocarbures terpéniques et de phénols, en présence de catalyseurs de Friedel-Crafts,
(ii) les résines susceptibles d'être obtenues par polymérisation d'alpha-méthyl styrène,
(iii) les colophanes d'origine naturelle ou modifiées,
(iv) les résines obtenues par hydrogénation, polymérisation ou copolymérisation de mélanges d'hydrocarbures aliphatiques insaturés ayant environ 5, 9 ou 10 atomes de carbone issus de coupes pétrolières,
(v) les résines terpéniques résultant généralement de la polymérisation d'hydrocarbures terpéniques en présence de catalyseurs de Friedel-Crafts,
(vi) les copolymères à base de terpènes naturels, et
(vii) les résines acryliques.

**7.** Mélange de polymères susceptible d'être utilisé dans la composition adhésive telle que définie dans la revendication 1 ou 2, ledit mélange comprenant au moins deux polymères appartenant à 2 groupes différents choisis parmi les groupes P1, P2, P3 et P4, ledit mélange comprenant au moins un polymère répondant à l'une des formules (Ibis), (IIbis), (IIIbis) et (IVbis) et présentant une quantité de fonctions silyle inférieure ou égale à 0,480 méq/g de polymère, étant entendu que :

- lorsqu'un polymère du groupe P3 est présent, le mélange comprend jusqu'à 15% en poids, par rapport au poids total du mélange, d'au moins un polyuréthane ou au moins un polyéther du groupe P3 ;
- lorsqu'un polymère du groupe P4 est présent, le mélange comprend jusqu'à 15% en poids, par rapport au poids total du mélange de polymères, d'au moins un polyuréthane ou au moins un polyéther du groupe P4 ;

P1 étant un groupe constitué par les polyuréthanes et les polyéthers présentant deux ou trois groupes terminaux de type trialkoxysilane ;

P2 étant un groupe constitué par les polyuréthanes et les polyéthers présentant deux ou trois groupes terminaux de type dialkoxysilane
P3 étant un groupe constitué par les polyuréthanes et les polyéthers présentant deux ou trois groupes terminaux de type monoalkoxysilane ;
P4 étant un groupe constitué par les polyuréthanes et les polyéthers présentant un groupe terminal de type mono-, di- ou tri-alkoxysilane.

**8.** Mélange de polymères selon la revendication 7, comprenant :

- jusqu'à 95% en poids, par rapport au poids total du mélange, d'au moins un polymère répondant à la formule (Ibis), et
- au moins un polymère répondant à la formule (IIbis) tel que décrit dans la revendication 1.

**9.** Mélange de polymères selon la revendication 7 ou la revendication 8, comprenant :

- de 10 à 85% en poids d'au moins un polymère répondant à la formule (Ibis), et
- de 15 à 90% en poids d'au moins un polymère répondant à la formule (IIbis), par rapport au poids total du mélange, d'au moins deux polymères.

**10.** Mélange de polymères selon la revendication 7, comprenant :

- jusqu'à 15% en poids, par rapport au poids total du mélange, d'au moins un polymère répondant à la formule (IIIbis), et
- au moins un polymère répondant à la formule (IIbis) tel que décrit dans la revendication 1.

**11.** Mélange de polymères selon la revendication 7, comprenant :

- de 5 à 95% en poids d'au moins un polymère répondant à la formule (Ibis), et
- de 5 à 15% en poids d'au moins un polymère répondant à la formule (IIIbis), par rapport au poids total dudit mélange.

**12.** Mélange de polymères selon la revendication 7, comprenant :

- au moins un polymère répondant à l'une des formules (Ibis), (IIbis), (IIIbis) ou (IVbis) décrites dans la revendication 1, et
- au moins un polymère répondant à l'une des formules (I), (II), (III) ou (IV) décrites dans la revendication 2.

**13.** Composition adhésive susceptible d'être utilisée pour la fabrication de l'article auto-adhésif selon l'une quelconque des revendications 1 à 6, comprenant :

- le mélange de polymères selon l'une quelconque des revendications 7 à 12,
- au moins une résine tackifiante, et
- au moins un catalyseur de réticulation.

**14.** Composition adhésive selon la revendication 13, comprenant :

- de 20 à 85% en poids, par rapport au poids total de la composition adhésive, dudit mélange de polymères,
- de 15 à 80% en poids, par rapport au poids total de la composition adhésive, d'au moins une résine tackifiante,
- de 0,01 à 3% en poids, par rapport au poids total de la composition adhésive, d'au moins un catalyseur de réticulation.

**Patentansprüche**

**1.** Selbstklebender Artikel mit einer Trägerschicht, die mit einer Klebstoffschicht überzogen ist, wobei die Trägerschicht die Form eines Schaumstoffs aufweist und eine Bruchdehnung, gemessen nach ISO-Norm 1926 bei 23°C, von 50 bis 1200%, sowie eine Rohdichte, gemessen nach ISO-Norm 845, von 25 bis 1200 kg/$m^3$ aufweist, wobei die Klebstoffschicht durch Vernetzen einer Klebstoffzusammensetzung erhalten wird, die Folgendes umfasst:

a) mindestens ein Polymer der Formel (Ia) oder mindestens ein Polymer der Formel (IIa) oder eine Mischung aus mindestens zwei Polymeren, die aus Polyurethanen und Polyethern mit einer, zwei oder drei Endgruppen vom Mono-, Di- oder Trialkoxysilan-Typ ausgewählt sind, wobei die Mischung mindestens ein Polymer umfasst, das einer der Formeln (Ia), (IIa), (IIIa) und (IVa) entspricht,
mit der Maßgabe, dass:

- wenn ein Polymer mit zwei oder drei Endgruppen vom Monoalkoxysilan-Typ vorliegt, die Mischung bezogen auf das Gesamtgewicht der Mischung bis zu 15 Gewichts-% des Polymers umfasst,
- wenn ein Polymer mit einer Endgruppe vom Mono-, Di- oder Trialkoxysilan-Typ vorliegt, die Mischung bezogen auf das Gesamtgewicht der Mischung bis zu 15 Gewichts-% des Polymers umfasst,

b) mindestens ein Klebrigmacher-Harz, und
c) mindestens einen Vernetzungskatalysator;

wobei
das Polymer der Formel (Ia) ein Polyurethan oder ein Polyether mit zwei oder drei hydrolysierbaren Endgruppen vom Trialkoxysilan-Typ ist, das eine Menge von Silylgruppen kleiner gleich 0,480 meq/g Polymer aufweist und der folgenden Formel entspricht:

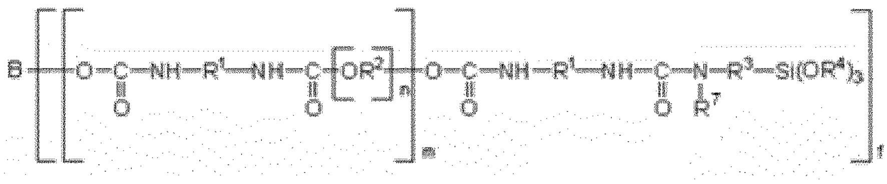
(Ia)

das Polymer der Formel (IIa) ein Polyurethan oder ein Polyether mit zwei oder drei hydrolysierbaren Endgruppen vom Dialkoxysilan-Typ ist, das eine Menge von Silylgruppen kleiner gleich 0,480 meq/g Polymer aufweist und der folgenden Formel entspricht:

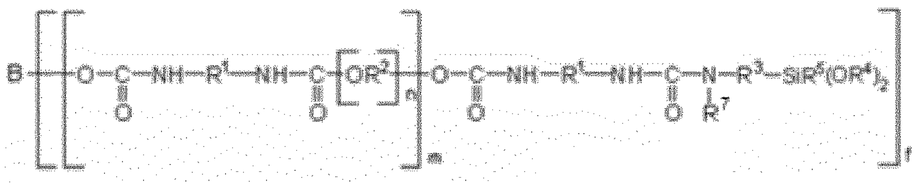
(IIa)

das Polymer der Formel (IIIa) ein Polyurethan oder ein Polyether mit zwei oder drei hydrolysierbaren Endgruppen vom Monoalkoxysilan-Typ ist, das eine Menge von Silylgruppen kleiner gleich 0,480 meq/g Polymer aufweist und der folgenden Formel entspricht:

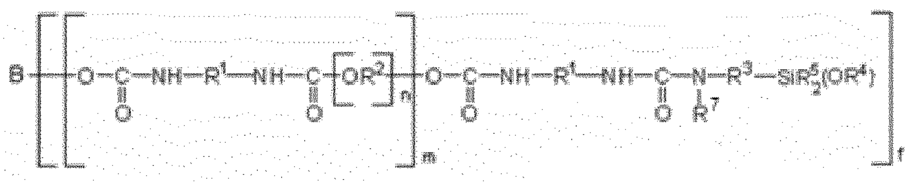
(IIIa)

das Polymer der Formel (IVa) ein Polyurethan oder ein Polyether mit einer hydrolysierbaren Endgruppe vom Mono-, Di- und/oder Trialkoxysilan-Typ ist, das eine Menge von Silylgruppen kleiner gleich 0,480 meq/g Polymer aufweist und der folgenden Formel entspricht:

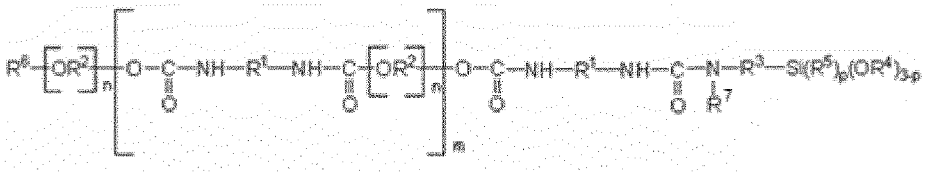

(IVa)

in den vorstehenden Formeln (Ia), (IIa), (IIIa) und (IVa)

- ist B eine der beiden folgenden Formeln:

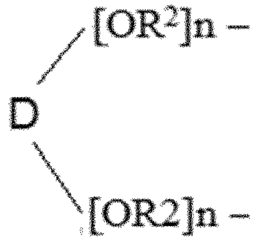

oder

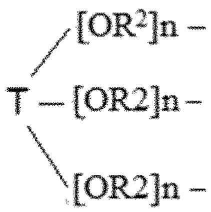

wobei D und T einen unverzweigten, verzweigten, zyklischen, alizyklischen oder aromatischen, gesättigten oder ungesättigten Kohlenwasserstoffrest mit 2 bis 66 Kohlenstoffatomen, mit gegebenenfalls einem oder mehreren Heteroatomen darstellen,
- stellt $R^1$ einen zweiwertigen Kohlenwasserstoffrest mit 5 bis 15 Kohlenstoffatomen dar, der aromatisch oder aliphatisch, unverzweigt, verzweigt oder zyklisch sein kann,
- stellt $R^3$ einen zweiwertigen unverzweigten oder verzweigten Alkylenrest mit 1 bis 6 Kohlenstoffatomen dar,
- stellt $R^2$ einen zweiwertigen unverzweigten oder verzweigten Alkylenrest mit 2 bis 4 Kohlenstoffatomen dar,
- stellen $R^4$ und $R^5$, identisch oder unterschiedlich, jeweils einen unverzweigten oder verzweigten Alkylrest mit 1 bis 4 Kohlenstoffatomen dar, wobei $R^4$ gegebenenfalls Teil eines Rings sein kann,
- stellt $R^6$ einen unverzweigten, verzweigten, zyklischen, alizyklischen oder aromatischen, gesättigten oder ungesättigten Kohlenwasserstoffrest mit 1 bis 22 Kohlenstoffatomen, mit gegebenenfalls einem oder mehreren Heteroatomen dar,
- stellt $R^7$ ein Wasserstoffatom, einen Phenylrest oder einen unverzweigten, verzweigten oder zyklischen Alkylrest mit 1 bis 10 Kohlenstoffatomen dar,
- ist n eine ganze Zahl derart, dass die mittlere molare Masse des Polyetherblocks mit der Formel $-[OR^2]_n-$von 300 g/Mol bis 40000 g/Mol beträgt,
- ist m eine ganze Zahl derart, dass die mittlere molare Masse des Polymers von 600 g/Mol bis 100000 g/Mol beträgt,
- ist p eine ganze Zahl gleich 0, 1 oder 2
- ist f eine ganze Zahl gleich 2 oder 3.

**2.** Selbstklebender Artikel nach Anspruch 1, wobei die Mischung aus mindestens zwei Polymeren Folgendes umfasst:

- mindestens ein Polymer, das einer der Formeln (Ia), (IIa), (IIIa) oder (IVa), die in Anspruch 1 beschrieben sind, entspricht, und
- mindestens ein Polymer, das einer der folgenden Formeln (I), (II), (III) oder (IV) entspricht:

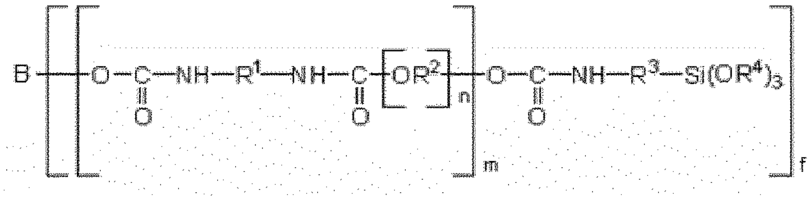

(I)

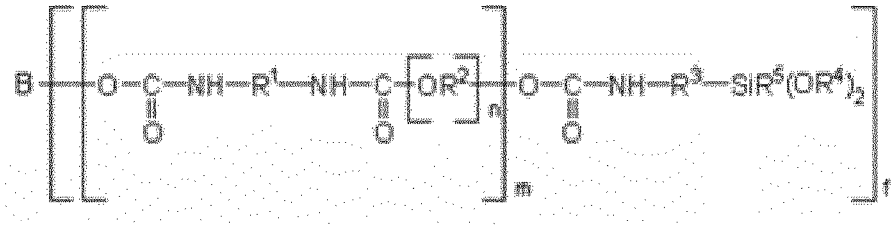

(II)

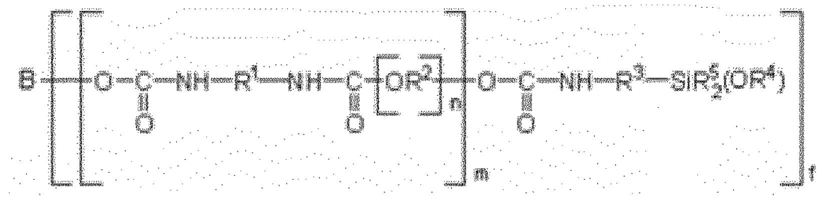

(III)

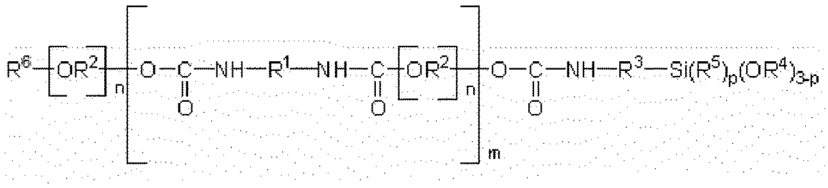

(IV)

mit der Maßgabe, dass:

- dann, wenn ein Polymer der Formel (IIIa) und/oder (III) vorliegt, die Mischung bezogen auf das Gesamtgewicht der Polymermischung bis zu 15 Gewichts-% von Polymer der Formel (IIIa) und/oder (III) umfasst,
- dann, wenn ein Polymer der Formel (IVa) und/oder (IV) vorliegt, die Mischung bezogen auf das Gesamtgewicht der Polymermischung bis zu 15 Gewichts-% von Polymer der Formel (IVa) und/oder (IV) umfasst;

in den vorstehenden Formeln (I), (II), (III) und (IV)

- ist B eine der beiden folgenden Formeln:

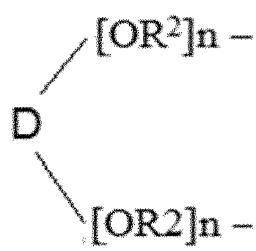

oder

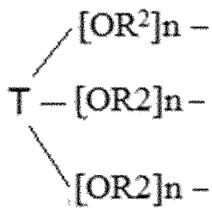

wobei D und T einen unverzweigten, verzweigten, zyklischen, alizyklischen oder aromatischen, gesättigten oder ungesättigten Kohlenwasserstoffrest mit 2 bis 66 Kohlenstoffatomen, mit gegebenenfalls einem oder mehreren Heteroatomen darstellen,

- stellt $R^1$ einen zweiwertigen Kohlenwasserstoffrest mit 5 bis 15 Kohlenstoffatomen dar, der aromatisch oder aliphatisch, unverzweigt, verzweigt oder zyklisch sein kann,
- stellt $R^3$ einen zweiwertigen unverzweigten oder verzweigten Alkylenrest mit 1 bis 6 Kohlenstoffatomen dar,
- stellt $R^2$ einen zweiwertigen unverzweigten oder verzweigten Alkylenrest mit 2 bis 4 Kohlenstoffatomen dar,
- stellen $R^4$ und $R^5$, identisch oder unterschiedlich, jeweils einen unverzweigten oder verzweigten Alkylrest mit 1 bis 4 Kohlenstoffatomen dar, wobei $R^4$ gegebenenfalls Teil eines Rings sein kann,
- stellt $R^6$ einen unverzweigten, verzweigten, zyklischen, alizyklischen oder aromatischen, gesättigten oder ungesättigten Kohlenwasserstoffrest mit 1 bis 22 Kohlenstoffatomen, mit gegebenenfalls einem oder mehreren Heteroatomen dar,
- ist n eine ganze Zahl derart, dass die mittlere molare Masse des Polyetherblocks mit der Formel $-[OR^2]_n-$von 300 g/Mol bis 40000 g/Mol beträgt,
- ist m eine ganze Zahl derart, dass die mittlere molare Masse des Polymers von 600 g/Mol bis 100000 g/Mol beträgt,
- ist p eine ganze Zahl gleich 0, 1 oder 2,
- ist f eine ganze Zahl gleich 2 oder 3.

3. Selbstklebender Artikel nach Anspruch 1 oder Anspruch 2, wobei die Trägerschicht ein Elastizitätsmodul kleiner gleich 300 MPa aufweist.

4. Selbstklebender Artikel nach einem der Ansprüche 1 bis 3, wobei die Trägerschicht in Form einer oder mehrerer Polymerschichten vorliegt.

5. Selbstklebender Artikel nach einem der Ansprüche 1 bis 4, wobei die Klebstoffzusammensetzung Folgendes umfasst:

- bezogen auf das Gesamtgewicht der Klebstoffzusammensetzung von 20 bis 85 Gewichts-% von mindestens einem Polymer oder einer Polymermischung nach Anspruch 1 oder 2,
- bezogen auf das Gesamtgewicht der Klebstoffzusammensetzung von 15 bis 80 Gewichts-% von mindestens einem Klebrigmacher-Harz,
- bezogen auf das Gesamtgewicht der Klebstoffzusammensetzung von 0,01 bis 3 Gewichts-% von mindestens einem Vernetzungskatalysator.

6. Selbstklebender Artikel nach einem der Ansprüche 1 bis 5, wobei das Klebrigmacher-Harz eine zahlenmittlere molare Masse von 100 Da bis 5 kDa aufweist und ausgewählt ist aus:

(i) Harzen, die durch Polymerisation von Terpen-Kohlenwasserstoffen und von Phenolen in Gegenwart von Friedel-Crafts-Katalysatoren erhalten werden können,
(ii) Harzen, die durch Polymerisation von alpha-Methylstyrol erhalten werden können,
(iii) Kolophoniumharzen natürlichen Ursprungs oder modifizierten Kolophoniumharzen,
(iv) Harzen, die durch Hydrierung, Polymerisation oder Copolymerisation von Mischungen aus ungesättigten aliphatischen Kohlenwasserstoffen erhalten werden, die ungefähr 5, 9 oder 10 Kohlenstoffatome aus Erdölfraktionen aufweisen,
(v) Terpen-Harzen, die im Allgemeinen aus der Polymerisation von Terpen-Kohlenwasserstoffen in Gegenwart von Friedel-Crafts-Katalysatoren stammen,
(vi) Copolymeren auf der Basis natürlicher Terpene, und
(vii) Acrylharzen.

**7.** Mischung aus Polymeren, die in der Klebstoffzusammensetzung nach Anspruch 1 oder 2 einsetzbar sind, wobei die Mischung mindestens zwei Polymere aus 2 verschiedenen Gruppen umfasst, die aus den Gruppen P1, P2, P3 und P4 ausgewählt sind, wobei die Mischung mindestens ein Polymer umfasst, das einer der Formeln (Ia), (IIa), (IIIa) und (IVa) entspricht und eine Menge von Silylgruppen kleiner gleich 0,480 meq/g Polymer aufweist, mit der Maßgabe, dass:

- wenn ein Polymer der Gruppe P3 vorliegt, die Mischung bezogen auf das Gesamtgewicht der Mischung bis zu 15 Gewichts-% mindestens eines Polyurethans oder mindestens eines Polyethers der Gruppe P3 umfasst,
- wenn ein Polymer der Gruppe P4 vorliegt, die Mischung bezogen auf das Gesamtgewicht der Mischung bis zu 15 Gewichts-% mindestens eines Polyurethans oder mindestens eines Polyethers der Gruppe P4 umfasst;

wobei P1 eine Gruppe ist, die aus Polyurethanen und Polyethern mit zwei oder drei Endgruppen vom Trialkoxysilan-Typ besteht;
wobei P2 eine Gruppe ist, die aus Polyurethanen und Polyethern mit zwei oder drei Endgruppen vom Dialkoxysilan-Typ besteht;
wobei P3 eine Gruppe ist, die aus Polyurethanen und Polyethern mit zwei oder drei Endgruppen vom Monoalkoxysilan-Typ besteht;
wobei P4 eine Gruppe ist, die aus Polyurethanen und Polyethern mit einer Endgruppe vom Mono-, Di- oder Trialkoxysilan-Typ besteht.

**8.** Polymermischung nach Anspruch 7, umfassend:

- bezogen auf das Gesamtgewicht der Mischung bis zu 95 Gewichts-% von mindestens einem Polymer, das der Formel (Ia) entspricht, und
- mindestens ein Polymer, das der Formel (IIa) nach Anspruch 1 entspricht.

**9.** Polymermischung nach Anspruch 7 oder Anspruch 8, umfassend:

- von 10 bis 85 Gewichts-% von mindestens einem Polymer, das der Formel (Ia) entspricht, und
- bezogen auf das Gesamtgewicht der Mischung aus mindestens zwei Polymeren von 15 bis 90 Gewichts-% von mindestens einem Polymer, das der Formel (IIa) entspricht.

**10.** Polymermischung nach Anspruch 7, umfassend:

- bezogen auf das Gesamtgewicht der Mischung bis zu 15 Gewichts-% von mindestens einem Polymer, das der Formel (IIIa) entspricht, und
- mindestens ein Polymer, das der Formel (IIa) nach Anspruch 1 entspricht.

**11.** Polymermischung nach Anspruch 7, umfassend:

- von 5 bis 95 Gewichts-% von mindestens einem Polymer, das der Formel (Ia) entspricht, und
- bezogen auf das Gesamtgewicht der Mischung von 5 bis 15 Gewichts-% von mindestens einem Polymer, das der Formel (IIIa) entspricht.

**12.** Polymermischung nach Anspruch 7, umfassend:

- mindestens ein Polymer, das einer der Formeln (Ia), (IIa), (IIIa) oder (IVa), die in Anspruch 1 beschrieben sind, entspricht, und
- mindestens ein Polymer, das einer der Formeln (I), (II), (III) oder (IV), die in Anspruch 2 beschrieben sind, entspricht.

**13.** Klebstoffzusammensetzung, die zur Herstellung des selbstklebenden Artikels nach einem der Ansprüche 1 bis 6 verwendbar ist, umfassend:

- die Polymermischung nach einem der Ansprüche 7 bis 12,
- mindestens ein Klebrigmacher-Harz, und
- mindestens einen Vernetzungskatalysator.

**14.** Klebstoffzusammensetzung nach Anspruch 13, umfassend:

- bezogen auf das Gesamtgewicht der Klebstoffzusammensetzung von 20 bis 85 Gewichts-% der Polymermischung,
- bezogen auf das Gesamtgewicht der Klebstoffzusammensetzung von 15 bis 80 Gewichts-% von mindestens einem Klebrigmacher-Harz,
- bezogen auf das Gesamtgewicht der Klebstoffzusammensetzung von 0,01 bis 3 Gewichts-% von mindestens einem Vernetzungskatalysator.

## Claims

**1.** Self-adhesive article comprising a support layer coated with an adhesive layer, said support layer being in the form of a foam and having an elongation at break ranging from 50% to 1200% measured according to the standard ISO 1926 at 23°C and an apparent density ranging from 25 to 1200 $kg/m^3$ measured according to the standard ISO 845, said adhesive layer is obtained by crosslinking an adhesive composition comprising:

a) at least one polymer of formula (Ia) or at least one polymer of formula (IIa) or one blend of at least two polymers chosen from polyurethanes and polyethers having one, two or three end groups of mono-, di- or trialkoxysilane type, said blend comprising at least one polymer corresponding to one of formulae (Ia,), (IIa), (IIIa) and (IVa),
it being understood that:

• when a polymer having two or three end groups of monoalkoxysilane type is present, said blend comprises up to 15% by weight, relative to the total weight of the blend, of said polymer,
• when a polymer having one end group of mono-, di- or trialkoxysilane type is present, said blend comprises up to 15% by weight, relative to the total weight of the blend, of said polymer,

b) at least one tackifying resin, and
c) at least one crosslinking catalyst; where
the polymer of formula (Ia) is a polyurethane or a polyether comprising two or three hydrolysable end groups of trialkoxysilane type, having an amount of silyl functions of less than or equal to 0.480 meq/g of polymer and corresponding to the formula below:

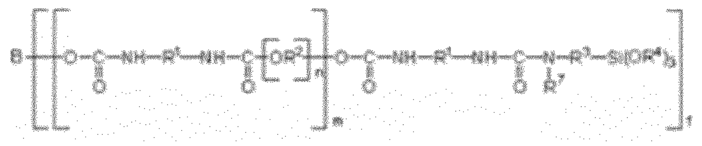

(Ia)

the polymer of formula (IIa) is a polyurethane or a polyether comprising two or three hydrolysable end groups of dialkoxysilane type, having an amount of silyl functions of less than or equal to 0.480 meq/g of polymer and corresponding to the formula below:

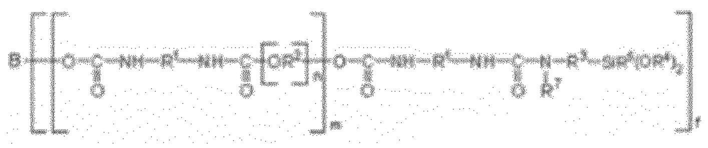

(IIa)

the polymer of formula (IIIa) is a polyurethane or a polyether comprising two or three hydrolysable end groups of monoalkoxysilane type, having an amount of silyl functions of less than or equal to 0.480 meq/g of polymer and corresponding to the formula below:

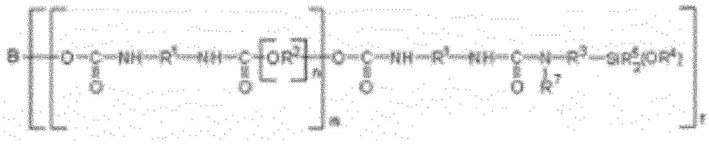

(IIIa)

the polymer of formula (IVa) is a polyurethane or a polyether comprising a hydrolysable end group of mono-, di- and/or trialkoxysilane type, having an amount of silyl functions of less than or equal to 0.480 meq/g of polymer and corresponding to the formula below:

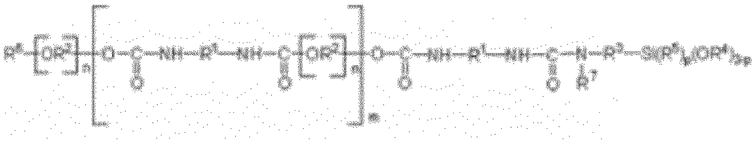

(IVa)

in formulae (Ia), (IIa), (IIIa) and (IVa) above,

- B represents one of the two formulae below:

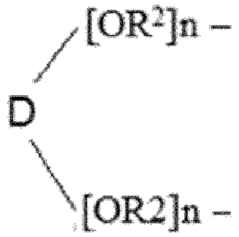

or

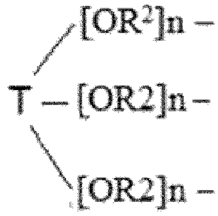

where D and T represent a linear, branched, cyclic, alicyclic or aromatic, saturated or unsaturated, hydrocarbon-based radical comprising from 2 to 66 carbon atoms, optionally comprising one or more heteroatoms,
- $R^1$ represents a hydrocarbon-based divalent radical comprising from 5 to 15 carbon atoms which may be aromatic or aliphatic, and linear, branched or cyclic,
- $R^3$ represents a linear or branched alkylene divalent radical comprising from 1 to 6 carbon atoms,
- $R^2$ represents a linear or branched alkylene divalent radical comprising from 2 to 4 carbon atoms,
- $R^4$ and $R^5$, which may be identical or different, each represent a linear or branched alkyl radical comprising from 1 to 4 carbon atoms, it being possible for $R^4$ to optionally be involved in a ring,
- $R^6$ represents a linear, branched, cyclic, alicyclic or aromatic, saturated or unsaturated, hydrocarbon-based radical comprising from 1 to 22 carbon atoms, optionally comprising one or more heteroatoms,
- $R^7$ represents a hydrogen atom, a phenyl radical or a linear, branched or cyclic alkyl radical comprising from 1 to 10 carbon atoms,
- n is an integer such that the average molar mass of the polyether block of formula $-[OR^2]_n-$ ranges from 300 g/mol to 40 000 g/mol,
- m is an integer such that the average molar mass of the polymer ranges from 600 g/mol to 100 000 g/mol,
- p is an integer equal to 0,1 or 2,
- f is an integer equal to 2 or 3.

**2.** Self-adhesive article according to Claim 1, in which the blend of at least two polymers comprises:

- at least one polymer corresponding to one of formulae (Ia), (IIa), (IIIa) or (IVa) described in Claim 1, and
- at least one polymer corresponding to one of formulae (I), (II), (III), or (IV) below:

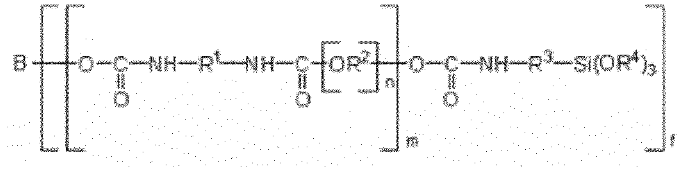

(I)

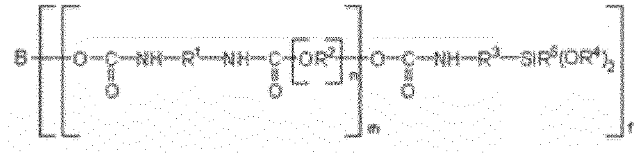

(II)

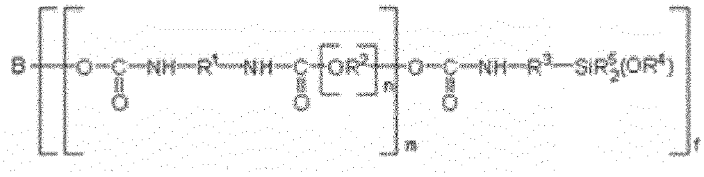

(III)

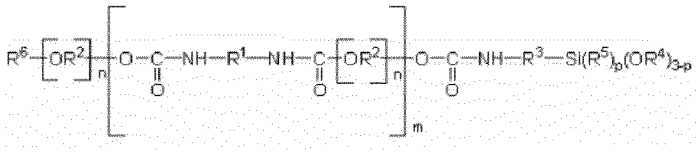

(IV)

it being understood that:

- when a polymer of formula (IIIa) and/or (III) is present, said blend comprises up to 15% by weight of polymer of formula (IIIa) and/or (III), relative to the total weight of the blend of polymer,
- when a polymer of formula (Iva) and/or (IV) is present, said blend comprises up to 15% by weight of polymer of formula (IVa) and/or (IV), relative to the total weight of the blend of polymers;

in formulae (I), (II), (III) and (IV) above,

- B represents one of the two formulae below:

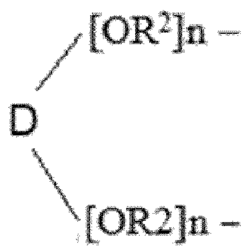

or

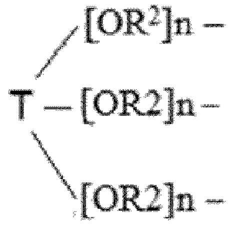

where D and T represent a linear, branched, cyclic, alicyclic or aromatic, saturated or unsaturated, hydrocarbon-based radical comprising from 2 to 66 carbon atoms, optionally comprising one or more heteroatoms,
- $R^1$ represents a hydrocarbon-based divalent radical comprising from 5 to 15 carbon atoms which may be aromatic or aliphatic, and linear, branched or cyclic,
- $R^3$ represents a linear or branched alkylene divalent radical comprising from 1 to 6 carbon atoms,
- $R^2$ represents a linear or branched alkylene divalent radical comprising from 2 to 4 carbon atoms,
- $R^4$ and $R^5$, which may be identical or different, each represent a linear or branched alkyl radical comprising from 1 to 4 carbon atoms, it being possible for $R^4$ to optionally be involved in a ring,
- $R^6$ represents a linear, branched, cyclic, alicyclic or aromatic, saturated or unsaturated, hydrocarbon-based radical comprising from 1 to 22 carbon atoms, optionally comprising one or more heteroatoms,
- n is an integer such that the average molar mass of the polyether block of formula $-[OR^2]_n-$ ranges from 300 g/mol to 40 000 g/mol,
- m is an integer such that the average molar mass of the polymer ranges from 600 g/mol to 100 000 g/mol,
- p is an integer equal to 0, 1 or 2,
- f is an integer equal to 2 or 3.

**3.** Self-adhesive article according to Claim 1 or Claim 2, in which the support layer has a Young's modulus of less than or equal to 300 MPa.

**4.** Self-adhesive article according to any one of Claims 1 to 3, in which the support layer is in the form of one or more polymeric layers.

**5.** Self-adhesive article according to any one of Claims 1 to 4, in which the adhesive composition comprises:

- from 20% to 85% by weight, relative to the total weight of the adhesive composition, of at least one polymer or one blend of polymers as defined in Claim 1 or 2,
- from 15% to 80% by weight, relative to the total weight of the adhesive composition, of at least one tackifying resin,
- from 0.01% to 3% by weight, relative to the total weight of the adhesive composition, of at least one crosslinking catalyst.

**6.** Self-adhesive article according to any one of Claims 1 to 5, in which the tackifying resin has a number-average molar mass ranging from 100 Da to 5 kDa and is chosen from:

(i) resins which can be obtained by polymerization of terpene hydrocarbons and of phenols, in the presence of Friedel-Crafts catalysts,
(ii) resins which can be obtained by polymerization of alpha-methylstyrene,
(iii) rosins of natural or modified origin,
(iv) resins obtained by hydrogenation, polymerization or copolymerization of mixtures of unsaturated aliphatic hydrocarbons having approximately 5, 9 or 10 carbon atoms derived from petrol fractions,
(v) terpene resins resulting generally from the polymerization of terpene hydrocarbons in the presence of Friedel-Crafts catalysts,
(vi) copolymers based on natural terpenes, and
(vii) acrylic resins.

**7.** Blend of polymers which can be used in the adhesive composition as defined in Claim 1 or 2, said blend having at least two polymers belonging to two different groups chosen from the groups P1, P2, P3 and P4, said blend comprising at least one polymer corresponding to one of formulae (IA), (IIa), (IIIa) and (IVa) and having an amount of silyl functions of less than or equal to 0.480 meq/g of polymer,

it being understood that:

- when a polymer of the group P3 is present, the blend comprises up to 15% by weight, relative to the total weight of the blend, of at least one polyurethane or at least one polyether of the group P3;
- when a polymer of the group P4 is present, the blend comprises up to 15% by weight, relative to the total weight of the blend of polymers, of at least one polyurethane or at least one polyether of the group P4;

P1 being a group consisting of polyurethanes and polyethers having two or three end groups of trialkoxysilane type;
P2 being a group consisting of polyurethanes and polyethers having two or three end groups of dialkoxysilane type;
P3 being a group consisting of polyurethanes and polyethers having two or three end groups of monoalkoxysilane type;
P4 being a group consisting of polyurethanes and polyethers having an end group of mono-, di- or trialkoxysilane type.

**8.** Blend of polymers according to Claim 7, comprising:

- up to 95% by weight, relative to the total weight of the blend, of at least one polymer corresponding to formula (Ia), and
- at least one polymer corresponding to formula (IIa) as described in Claim 1.

**9.** Blend of polymers according to Claim 7 or Claim 8, comprising:

- from 10% to 85% by weight of at least one polymer corresponding to formula (Ia), and
- from 15% to 90% by weight of at least one polymer corresponding to formula (IIa), relative to the total weight of the blend, of at least two polymers.

**10.** Blend of polymers according to Claim 7, comprising:

- up to 15% by weight, relative to the total weight of the blend, of at least one polymer corresponding to formula (IIIa), and
- at least one polymer corresponding to formula (IIa) as described in Claim 1.

**11.** Blend of polymers according to Claim 7, comprising:

- from 5% to 95% by weight of at least one polymer corresponding to formula (Ia), and
- from 5% to 15% by weight of at least one polymer corresponding to formula (IIIa),

relative to the total weight of said blend.

**12.** Blend of polymers according to Claim 7, comprising:

- at least one polymer corresponding to one of formulae (Ia), (IIa), (IIIa) or (IVa), and
- at least one polymer corresponding to one of formulae (I), (II), (III) or (IV) described in Claim 2.

**13.** Adhesive composition which can be used for producing the self-adhesive article according to any one of Claims 1 to 6, comprising:

- the blend of polymers according to any one of Claims 7 to 12,
- at least one tackifying resin, and
- at least one crosslinking catalyst.

**14.** Adhesive composition according to Claim 13, comprising:

- from 20% to 85% by weight, relative to the total weight of the adhesive composition, of said blend of polymers,
- from 15% to 80% by weight, relative to the total weight of the adhesive composition, of at least one tackifying resin,

- from 0.01% to 3% by weight, relative to the total weight of the adhesive composition, of at least one crosslinking catalyst.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011082094 A
- US 6231962 B
- WO 2009106699 A
- EP 2336208 A


### Littérature non-brevet citée dans la description


- **KLEMPNER et al.** Polymeric foam technology. Hanser, 2004, 479
- **W. WAGNER et al.** *International Steam Tables - Properties of Water and Steam based on the Industrial Formulation IAPWS-IF97*